(19) Europäisches Patentamt
European Patent Office
Office européen des brevets

(11) EP 4 667 216 A1

(12) # EUROPEAN PATENT APPLICATION

(43) Date of publication:
**24.12.2025 Bulletin 2025/52**

(21) Application number: **24183819.2**

(22) Date of filing: **21.06.2024**

(51) International Patent Classification (IPC):
***B32B 27/06*** *(2006.01)* ***B32B 7/02*** *(2019.01)*

(52) Cooperative Patent Classification (CPC):
**B32B 7/12; B32B 5/022; B32B 5/024; B32B 15/08; B32B 15/20; B32B 23/04; B32B 23/042; B32B 23/048; B32B 23/08; B32B 23/18; B32B 27/065; B32B 27/08; B32B 27/18; B32B 27/20; B32B 27/306;** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Camm Solutions (Spain) R&D, S.l.u.**
**46138 Rafelbunyol Valencia (ES)**

(72) Inventors:
- **ROBERTZ, Bernd**
  **52382 Niederzier (DE)**
- **AGREDANO PILA, Isabel**
  **Valencia 46460 (ES)**

(74) Representative: **Michalski Hüttermann & Partner Patentanwälte mbB**
**Kaistraße 16A**
**40221 Düsseldorf (DE)**

(54) **SHEET MATERIAL, PACKAGING CONTAINER, FLEXIBLE COMPOSITE AND METHOD FOR RECYCLING**

(57) The present invention is directed to sheet material comprising at least a first layer, a second layer, and a third layer, wherein the first layer is arranged in between the second layer and the third layer, wherein the first layer consists of a first material, the first material comprising at least 50 wt% of a functional component based on the weight of the first material, the functional component consisting of one or more water-soluble polymers and/or one or more water-swellable polymers, such that the first layer is a water-soluble layer or a water-disintegrating layer; and wherein the first layer comprises a transmission haze ≥ 1.5 % determined according to ASTM D 1003, and/or the first material comprises a coloring agent.

Furthermore, the invention is directed to a packaging container or flexible composite comprising the above sheet material.

Additionally, the present invention is directed to a method for recycling the above sheet material, the above packaging container, or the above flexible composite, comprising the steps of:
- shredding the sheet material, the packaging container, or the flexible composite to flakes, granulates and/or a powder,
- exposing the flakes, granulates and/or or powder to an aqueous washing solution;
- separating solid components from the aqueous washing solution.

EP 4 667 216 A1

(52) Cooperative Patent Classification (CPC): (Cont.)
**B32B 29/002; B32B 29/007;** B32B 2250/03;
B32B 2250/24; B32B 2264/00; B32B 2264/02;
B32B 2264/06; B32B 2264/10; B32B 2264/101;
B32B 2264/102; B32B 2264/104; B32B 2264/12;
B32B 2272/00; B32B 2307/402; B32B 2307/408;
B32B 2307/716; B32B 2307/7163;
B32B 2307/7166; B32B 2307/7242;
B32B 2307/7244; B32B 2307/728; B32B 2307/73;
B32B 2307/7376; B32B 2439/00; B32B 2439/40;
B32B 2439/60

## Description

The present invention relates to a sheet material comprising at least three layers.

Further, the present invention relates to a packaging container or a flexible composite comprising the above sheet material.

Further, the invention relates to a method for recycling the above sheet material, the above packaging container, or the above flexible composite.

BACKGROUND OF THE INVENTION

Plastic articles, such as packaging, containers and flexible composites such as films, are widely used in daily life, since they are easy to manufacture, rather inexpensive and lightweight. It is often desired that the plastic article has a specific color or transparency.

Packaging containers or films made from mono-materials have the advantage of an easy recyclability. Mono-material means that a packaging consists of only one material. In the case of plastics, this would for example be packaging container made entirely of the plastic polyethylene (PE).

However, mono-material packaging containers or films often do not meet all the properties desired from a packaging container or film. For example, mechanical and/or optical material properties for the necessary rigidity of the packing container, UV protection properties, and/or barrier protection properties of the packing container against oxygen, vapors and/or foreign substances cannot be achieved with a mono-material packaging container.

To meet these and other needs multilayer materials are often used in packaging containers and flexible composites. However, multilayer materials, which are made up of several layers that are practically inseparably connected to one another pose a problem for recycling. Due to their outstanding properties, such multilayer materials are used primarily for packaging in the food sector, for example pre-packaged cheese, sausage, or snacks, but also for chemicals sensitive to oxygen, in medicine or pharmacy. At the end of the product life cycle, the only option for these materials is often thermal recycling, which is not a desirable solution from an ecological point of view.

Furthermore, packaging containers and flexible composites not only protect the goods within the packaging container, and make the goods transportable, but also offer the possibility to display information on the packaging container or flexible composite and/or use the packaging container or flexible composite for advertising/design purposes. Thus, it is often desired that packaging containers or flexible composites have a certain color, or several colors.

The selection of the pigments and/or dyes as coloring agents for packaging containers and flexible composites depends not only on the desired color, but also on the material of the packaging container or flexible composite, on the application, and the associated requirements, such as the use of the packaging container or flexible composite. In sensitive areas, such as food packaging or packaging for medicinal applications, contamination of the filling goods by a substance in the packaging container must be avoided at all efforts. Furthermore, also a contamination of a user of the packaging container or flexible composite by a colored outer surface of the packaging container or flexible composite must be avoided. Hence, it is important that the dyes and/or pigments used, are hindered from migrating from the packaging container or flexible composite into the filling good or in an outer environment of the packaging container or flexible composite under the conditions in which the packaging container or flexible composite is used.

Colored materials, and in particular colored materials in which the dyes and/or pigments are highly hindered from migrating, have however a disadvantage in the recycling process of the packaging container or flexible composite, as they cannot be removed from the material during mechanical recycling. In particular, colored plastic articles may only be recycled at great expense by separating the articles in an additional sorting process according to their color, after having separated the articles according to the kind of plastic/polymer, in order to achieve high quality colored recycled material. When colorful plastics are mixed during regranulation, recyclates with undesirable color tones (brown, grey, black) result, so that these recyclates can only be used to a very limited extent.

Alternatively, in the recycling process the dyes and/or pigments within the plastic may be chemically modified for example by strong oxidation or reduction processes such that the dyes and/or pigments lose their chromophoric property. However, the destroyed dyes and/or pigments remain in the plastic and thus limit the use of the recylate. Furthermore, the oxidation or reduction agents are very aggressive and need to be used in high amounts, which is not environmentally friendly.

Thus, there is a need to provide high-quality packaging containers and flexible composites that meet the needs regarding the mechanical, optical and/or barrier properties, are safe for the packaged good and the consumer, and only pose a minimal impact on the environment by being easily recyclable.

SUMMARY OF THE INVENTION

It is an object of the invention to provide a sheet material comprising at least a first layer, a second layer, and a third

layer, wherein the first layer is arranged in between the second layer and the third layer, wherein the first layer consists of a first material, the first material comprising at least 50 wt% of a functional component based on the weight of the first material, the functional component consisting of one or more water-soluble polymers and/or one or more water-swellable polymers, such that the first layer is a water-soluble layer or a water-disintegrating layer; wherein the first layer comprises a transmission haze ≥ 1.5 % determined according to ASTM D 1003, and/or the first material comprises a coloring agent; wherein the second layer consists of a second material, the second material comprising paper, non-woven textile, woven textile, a metal, preferably aluminum, a glasslike layer comprising $SiO_x$, $AlO_x$ and/or C, a radiation cured coating, a physically or chemically cross-linked coating, a layer solidified by evaporation of a solvent, and/or a water-insoluble polymer; and wherein the third layer consists of a third material, the third material comprising paper, non-woven textile, woven textile, a metal, preferably aluminum, a glasslike layer comprising $SiO_x$, $AlO_x$ and/or C, a radiation cured coating, a physically or chemically cross-linked coating, a layer solidified by evaporation of a solvent, and/or a water-insoluble polymer.

Furthermore, it is an object of the invention to provide a packaging container or flexible composite comprising the above sheet material. The packaging container or flexible composite can be produced by various techniques. According to a preferred embodiment of the invention, the packaging container or flexible composite is produced by blow molding, stretch blow molding, injection stretch blow molding, coextrusion, deepdrawing, blown or cast film, injection molding, and/or lamination.

Additionally, it is an object of the invention to provide a method for recycling the above sheet material, or the above packaging container, or the above flexible composite comprising the steps of:

- Shredding the sheet material, the packaging container, or the flexible composite to flakes, granulates and/or a powder,
- exposing the flakes, granulates and/or or powder to an aqueous washing solution;
- separating solid components from the aqueous washing solution.

One aspect of the invention is, that the sheet material comprises three layers and the middle layer - i.e. the first layer - is a colored layer. In the context of this application being colored includes chromatic and achromatic coloring. Thus, also black, white and gray are considered colors. In other words, the first layer comprises a transmission haze ≥ 1.5 % determined according to ASTM D 1003. As the middle layer is the colored layer, the consumer and the filling good are protected by the second and third layers from the colored layer of the sheet material. This makes a packaging container or flexible composite comprising said sheet material particularly safe.

The appearance of a layer can essentially be separated into gloss, color and transparency. Transparency can be described by three effects, total transmission, haze and clarity. Total transmission is the amount of light that passes through the material without being scattered. In other words, total transmission is the ratio of the transmitted to the incident light which is reduced by reflection and absorption. Haze is the amount of light that is subject to Wide Angle Scattering - i.e. scattering at an angle greater than 2.5° from normal. In other words, haze is according to ASTM D 1003 the percentage of the light deviating by more than 2.5° of the incident light beam. Clarity is the amount of light that is subject to Narrow Area Scattering - i.e. scattering at an angle less than 2.5° from normal.

A further aspect of the invention is that the first layer is water-soluble layer or a water-disintegrating layer. This is achieved by the first material comprising at least 50 wt% of the functional component based on the weight of the first material, the functional component consisting of one or more water-soluble polymers and/or one or more water-swellable polymers.

The first layer being a water-soluble layer or a water-disintegrating layer preferably means in the context of this invention that a weight change of a test specimen consisting only of the first material is more than 3.5 wt%, preferably more than 5 wt% and further preferably more than 10 wt%, when stored in water at 23°C for 24 hours or when submerged in boiling water for 30 min, based on the original weight of the test specimen before being stored in water. As the first layer is also the layer that is colored, this has the effect that the recycling of the sheet material is particularly easy, as the colored layer dissolves or disintegrates during recycling. The dissolution and/or disintegration of the first layer during recycling also means, that the second layer and the third layer are separated from each other. Thus, in case the second material and the third material are different to each other, these materials can then be separated from each other in a respective sorting process.

The weight change of a test specimen of the first layer - i.e. the weight change of the water-soluble layer or water-disintegrating layer - is preferably determined according to ISO 294-3 (cavity dimensions: $W \times L \times T = 62 \times 62 \times 1.1\ mm^3$) when stored or treated according to either of the following method 1 or method 2. The weight change in % is calculated according to:

$$\text{weight change in \%} = \frac{\text{conditioned weight after test} - \text{conditioned weight before test}}{\text{conditioned weight before test}} \text{ x } 100$$

Before testing specimens of the first layer are dried in an oven at 60°C for 48h and then placed in a desiccator to cool. Immediately upon cooling the specimens are weighed. For method 1 the specimens are then submerged in 500 mL of water at 23°C for 24 hours. Specimens are removed, patted dry with a lint free cloth, and weighed. For method 2 the specimens are then submerged in 500 mL of boiling water (100 °C) for 30 min. Specimens are removed, patted dry with a lint free cloth, and weighed.

According to a preferred embodiment of the invention, the first layer comprises a transmission haze ≥ 3 %, preferably ≥ 5 %, and further preferably ≥ 10 % determined according to ASTM D 1003. This has the effect that the color of the first layer is easily visible for the consumer even in cases that the second or third layers comprise materials such as paper.

The coloring of the first layer can be achieved by the coloring agent, which can be part of the first material. The coloring agent can have chromophoric properties and thus give the first material a specific chromatic color, e.g. red or blue. Alternatively, the coloring agent can give the first layer an achromatic color e.g. white, gray, or black. Furthermore, the coloring agent can cause the first layer to have a transmission haze ≥ 1.5 % as light scattering occurs at phase boundaries of the coloring agent and the functional component of the first material.

Furthermore, a transmission haze ≥ 1.5% and/or an achromatic coloring of the first layer can also be achieved without an additional coloring agent but by morphological properties e.g. by the crystallization of the functional component of the first layer itself.

According to a preferred embodiment of the invention, at least one of an a-value or b-value of a CIELAB color space is different to 0 for the first layer. In other words, in this preferred embodiment the first layer is a chromatically colored layer. In this case the first material preferably also comprises a coloring agent.

The RGB color space works on the principle of the additive color space. This means that it reproduces the entire color range by mixing the basic colors red, green and blue. The RGB color space can be found in all self-illuminating systems, such as monitors or television screens. All possible colors are defined by their red, green and blue components and mapped accordingly by the overlay of colored light. Unlike the RGB color space, the CIELAB color space is based on counter-color theory. It is based on the assumption that three separate chemical processes take place in the human retina, which always contain two opposite colors, the two opposite colors striving for balance with one another. An example pair would be the combination of blue and yellow. CIELAB is used, for example, for photo editing software. While the RGB color space is device-dependent, this is not the case for the CIELAB color space. RGB includes - regardless of the device - all potentially possible colors, which above all enables the conversion of color definitions from one device to the other.

It is important for the conversion that CIELAB coordinates to separate brightness information L* from the rest of the color information. RGB images do not have such a separation - a change in brightness therefore changes the entire color information.

Convert sRGB to CILAB: http://colormine.org/convert/rgb-to-lab
Conversion CILAB to sRGB: http://colormine.org/convert/lab-to-rgb

The CIELAB (also called Lab) describes all perceptible colors. It uses a three-dimensional color space in which the brightness value L* is perpendicular to the color plane (a, b). The a-coordinate indicates the color type and color intensity between green and red and the b-coordinate the color type and color intensity between blue and yellow. The greater the positive a and b values and the smaller the negative a and b values, the more intense the color tone. If a=0 and b=0, there is an achromatic color tone on the brightness axis. In the usual software implementations, L* (lightness) can assume values between 0 and 100 and a and b can vary between -128 and 127. In the usual 8-bit model per color channel, 16.7 million possible Lab coordinates are achieved in this way.

The most important properties of the Lab color model include device independence and perceptual relevance, i.e. colors are defined as they are perceived by a normal observer under standard lighting conditions, irrespective of the way they are produced or reproduced. The color model is standardized in ISO/CIE 11664-4 "Colorimetry - Part 4: CIE 1976 L*a*b* Colour space". In Germany, this replaces DIN 6174 "Colorimetric determination of chromaticity coordinates and colour distances in the approximately uniform CIELAB colour space", which was withdrawn in 2011.

The color in the CILAB color space is preferably measured with the Spectrometer Konika-Minolta CM-3600A - according to the guideline of the INSTRUCTION MANUAL CM-3600A (©2011-2013 KONICA MINOLTA, INC.). The test specimen is placed in the measuring device between the measuring aperture and standardized measuring backgrounds and held in position by means of the specimen holder. Transmission and reflection are measured against a standardized white background as well as against a standardized black background (standard backgrounds are supplied by Konica Minolta). The color coordinates (L*, a, b), chroma (C*), hue (h°) and color strength (ISO 787-26; DIN 55986, SUM) are automatically calculated by the B/W Hummingbird.

According to an alternative embodiment of the invention both of an a-value and b-value of a CIELAB color space is 0 for the first layer. In other words, in this preferred embodiment the first layer is an achromatically colored layer. In this case the first material may comprises a coloring agent, but can also be free of a coloring agent.

According to another preferred embodiment of the invention, the functional component of the first material comprises crystallites with a crystallite size ≥ 400 nm. As the crystallite size is in the range of the wavelength of the visible light this is a way of achieving a transmission haze for the first layer without adding a coloring agent. The crystallite size is preferably determined by transmission-electron-microscopy or by x-ray diffraction line-broadening. Furthermore, a degree of crystallinity and thus also the transmission haze can be increased by slow cooling in the production process and/or by tempering of the first material, the first layer, the sheet material, the packaging container, or the flexible composite. Preferably a temperature for tempering is equal to or greater than the glass transition temperature of the first layer. If the crystallites or spherulites are larger than the wavelength of visible light, the first material becomes increasingly hazy with increasing crystallinity.

As the first layer is the colored layer, it is preferred that the second layer and/or the third layer provide a certain transparency, in order that the visibility of the colored layer is enhanced. Regarding this and according to another preferred embodiment of the invention, the second material comprises and preferably consists of the water-insoluble polymer and/or wherein the third material comprises and preferably consists of the water-insoluble polymer. Further preferably a crystallinity degree of below 60% is preferred for the water-insoluble polymer, further preferably blow 40% and in particular preferably below 20%. It is also possible that the water-insoluble polymer is an amorphous polymer making the second and/or third layer highly transparent.

The degree of crystallinity is preferably determined with DSC according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3 (Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

In context to this and according to another preferred embodiment of the invention, a crystal size of crystals in the second and/or third layer are below 400 nm. As the crystal size is below the wavelength of the visible light, the second and/or third layer are for the human eye semi-transparent or transparent. In an alternative embodiment the second and/or third layer are translucent or opaque instead of (semi-)transparent.

According to another preferred embodiment of the invention, the first layer is a foamed layer. This has the advantage that the inner surface of the first layer is higher, which makes the dissolution and/or disintegration of the first layer more efficient. Additionally, providing a foamed layer is an easy way to ensure that the transmission haze of the first layer is ≥ 1.5 %.

According to another preferred embodiment of the invention, a thickness of the first layer is lower than a thickness of the second layer and/or wherein the thickness of the first layer is lower than a thickness of the third layer. Preferably the thickness of the first layer is lower than the thickness of the second and the third layer. A low thickness of the first layer leads to a fast dissolution/disintegration of the first layer and thus ensures an efficient recycling process. Preferably the thickness of the first layer is 2/3 or less of the thickness of the second and/or third layer.

It is possible that the sheet material consists of the first, the second and the third layer. In such a case the first layer is not only in between the second and the third layer but also directly adjacent to the second and the first layer. However, it is also possible that the sheet material comprises additional further layers. In connection to this, and according to a preferred embodiment of the invention, the sheet material comprises at least one, preferably two, further layer, the further layer being arranged in between the first layer and the second layer and/or in between the first layer and the third layer. The further layer, or the further layers can enhance the adhesion of the first layer to the second layer or the first layer to the third layer and therefore increase the stability of the sheet material. Thus, the further layer is also called tie-layer. According to another preferred embodiment of the invention, the further layer is free of a coloring agent. This helps to reduce the effort in the recycling process.

According to another preferred embodiment of the invention a sheet material is provided wherein the first layer is entirely encapsulated by the second layer and the third layer. This has the effect that during the use of the sheet material, in particular in the packaging container or flexible composite, the first layer is protected by the second and third layer from the environment and in particular from moisture and/or water. However, in the recycling process when the sheet material / packaging container / flexible composite is shredded, access is provided to the first layer at the edges.

According to another preferred embodiment of the invention a sheet material is provided wherein the first material is free of a water-insoluble compound. This has the advantage that in the recycling process of the sheet material / packaging container / flexible composite all components of the first layer go into solution. Thus, the only solid components during recycling stem from the second layer, the third layer and/or potential further layers of the sheet material. This makes it possible to simply decolor the sheet material by a solid-liquid separation during the recycling process.

In context to this and according to another preferred embodiment of the invention it is preferred that the second material and/or the third material is free of a coloring agent. Thus, there is no need to decolor the second and/or third material of the sheet material in the recycling process, which is cost efficient and environmentally friendly. Even though the

second and/or third material may be free of a coloring agent, it is still possible that the second layer and/or the third layer are uniformly colored layers. The color of the second and/or third layer can be achieved by the native color of the second and third material, respectively.

According to a preferred embodiment of the invention, the second material is the same as the third material. In other words, in this preferred embodiment the second layer and the third layer consist of the same material. This has the advantage that the sheet material can efficiently be recycled as no separation of the second and third material is necessary.

However, it is also possible that the second and the third material are different to each other. In context to this and according to an alternative preferred embodiment of the invention, the second material is different from the third material, wherein the second layer and the third layer are uniformly colored layers, and wherein the color of the second layer is different to the color of the third layer in such a way that at least one of L*-value, a-value, or b-value of a CIELAB color space of the second layer is different to the respective L*-value, a-value, or b-value of the third layer by at least 10, preferably at least 20, and further preferably at least 30. In this preferred embodiment the second and the third material differ from each other in their color. This has the advantage that a separation of the second material and the third material in the recycling process can be achieved by a simple color separation process. When using the sheet material as packaging container or flexible composite it is preferred that either the second or third layer is the innermost layer of the packaging container or flexible composite. Thus, the second or third layer comes in direct contact with the filling good. In particular when substances from the filling good migrate into the innermost layer, it is much easier to separate the innermost layer from the other components in the recycling process when the two layers have different colors by a color separation, instead of an analysis to detect the contaminant that migrated into the innermost layer.

## First material

In the following aspects of the first material are described.

### Coloring agent

As already mentioned, the first material can comprise the coloring agent. In this regard and according to a preferred embodiment of the invention, it is preferred that the first material comprises the coloring agent, and wherein the coloring agent is selected from organic pigments, organic dyes, inorganic pigments, opacifying agents, or a combination thereof. Opacifying agents are substances that may by themself be colorless and/or transparent but create a transmission haze when mixed with the water-soluble and/or water-swellable polymer of the first material.

Preferably, the coloring agent is selected from the group consisting of phthalocyanine, diketopyrrolopyrrole, polymethine, anthraquinone, indanthrone, monoazo, diazo, methine, quinophthalone, perinone, naphthalidimide, indigo, quinoline and thioindigo dyes and pigments, natural inorganic pigments, such as ochre, vermilion or red chalk titan, and synthetic pigments such as titanium(IV)oxide, calcium pigments, copper pigments, bismuth pigments, cobalt pigments, nickel pigments, molybdenum pigments, cadmium pigments, lead pigments, iron pigments, chrome pigments, carbon black, silicate minerals such as fumed silica - also known as pyrogenic silica, silane compounds with organic and/or inorganic attachments, thermoplastic polymers such as polyacrylate, polyurethane, polyamide, thermosetting polymers such as thermosetting polyurethane, aminoresins such as polymethylurea, and combinations thereof.

According to another preferred embodiment of the invention, the amount of the coloring agent in the first material is at least 0.001 wt%, based on the weight of the first material. Preferably the amount is at least 0.05 wt% based on the weight of the first material.

According to a further preferred embodiment of the invention, the amount of the coloring agent in the first material is not more than 20 wt%, and preferably not more than 10°wt%, based on the weight of the first material. Typically, the amount of the coloring agent in the first material is in between 0.05 wt% to 6 wt% depending on the type of coloring agent and the desired color intensity.

With regard to the coloring agent, different types of dyes and/or pigments can be used. The coloring agent may be a disperse dye, a solvent dye, an acid dye (anionic dye) and/or or an acid dye converted into a pigment or a so-called lake pigment, a basic dye (cationic dye), a vat or mordant dye, a reactive dye, a metal complex dye, a direct dye, a self-levelling dye, a alkali clearable dye, a sulfur dye or a polymer-bound dye according to the name or designation according to the Color Index. Typical trichromatic ink systems with which large color spaces can be spanned are, for example, the three solvent dyes Solvent Blue 104, Solvent Red 195 and Solvent Yellow 63 or the three disperse dyes Disperse Blue 56, Disperse Red 60 and Disperse Yellow 54.

The coloring agent may be a natural or synthetic organic or inorganic pigment. Natural organic pigments occur in nature as "animal" or "plant" colours. Synthetic organic pigments are categorised according to their chemical structure. The most diverse and largest group are the azo pigments. A distinction is made between monoazo and disazo pigments according to the number of azo bonds they contain. A further distinction is made according to the respective substituents. Monoazo pigments include simple monoazo pigments such as β-naphthol pigments, naphthol AS pigments, lacquered

azo dyes and benzimidazolone pigments, which in turn are monoazo pigments and have polycyclic substituents. Polycyclic pigments are compounds whose properties as chromophores are generated by a delocalisation of electrons via a more or less extended ring system. The majority of polycyclic pigments are copper phthalocyanine pigments, which make up about half of all polycyclic pigments. The most important representatives of this group are the various types of phthalocyanine blue and the halogenated types (phthalocyanine green). Other important polycyclic pigment classes are quinacridones, diketopyrrolopyrrole pigments, dioxazines, perylenes, isoindolines and inthanthrones.

Preferably, the coloring agent is selected from the group of pigments comprising C.I. Pigment Yellow 1, 3 and 74, C.I. Pigment Orange 5 or C.I. Pigment Red 112, C.I. Pigment Yellow 154 or C.I. Pigment Orange 36, the diaryl yellow pigments (C.I. Pigment Yellow 83), the disazo condensation pigments (C.I. Pigment Yellow 128) or the acetoacetic acid anilide pigments (C.I. Pigment Yellow 155).

Preferably, the coloring agent is selected from the group comprising phthalocyanine, diketopyrrolopyrrole, polymethine, anthraquinone, indanthrone, monoazo, diazo, methine, quinophthalone, perinone, naphthalidimide, indigo, quinoline and thioindigo dyes and pigments. Chemically, the most important industrial inorganic pigments can be categorised into eight substance classes. Specifically, these are titanium dioxide, carbon black, bismuth pigments, oxides and hydroxides, iron cyan blue, ultramarine, cadmium pigments and chromate pigments. The group of oxides and hydroxides is further subdivided into iron oxide pigments, chromium oxide and mixed-phase oxide pigments such as Rinman's green (the latter with the subgroups spinel pigments, haematite pigments, inverse spinel pigments and rutile derivatives). The group of chromate pigments is further subdivided into chromium yellow, chromium green and molybdate.

Preferably, the coloring agent is selected from the group of natural pigment comprising earths and minerals such as ochre, vermilion or red chalk titan, or of synthetic pigments comprising titanium, calcium, copper, bismuth, cobalt, nickel, molybdenum, cadmium, lead, iron or chrome. Also effect pigments can be used. Effect pigments are divided into metallic effect pigments, pearlescent effects and luminescent pigments.

Further possible coloring agents can be selected from lake pigments, and in particular lake pigments comprising aluminum, calcium and barium salts. In other words, preferably aluminum, calcium and/or barium compounds are used in order to make the lake pigment from the dye. Many lake pigments are allowed as food colorant according to the annex of the Regulation (EC) No. 1333/2008 in the European Union or under the Federal Food, Drug, and Cosmetic Act Chapter VII, section 721 further elaborated in the regulations in Title 21 of the Code of Federal Regulations Parts 73, 74, 81 and 82 in the United States of America. Thus, using these lake pigments enables high safety for sensitive areas, such as food packaging or packaging for medicinal applications, since even in the very unlikely case that the lake pigment contaminates the substance in the packaging no health threat exists for the consumer.

More preferably the lake pigment is selected from the group comprising the following chemical formulas A1 to A14 according to table 1:

| Table 1: Overview of lake pigments | |
|---|---|
| Description | Chemical structure of the dye used for making the lake pigment |
| A1: Allura Red<br>A1 L: Lake Allura Red: Precipitated as Al-salt | 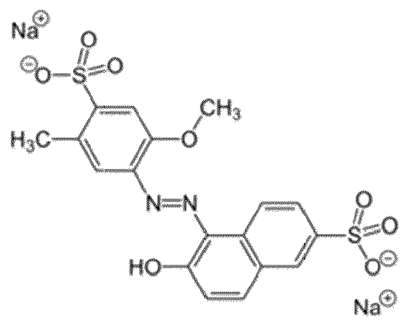 |
| A2: Tartrazine<br>A2 L: Lake Tartrazine: Precipitated as Al-salt | 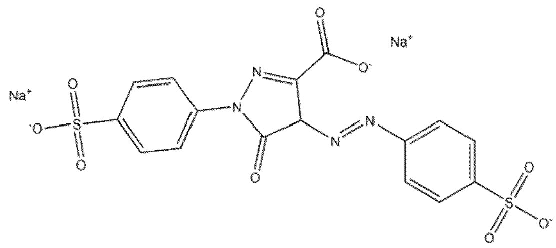 |

(continued)

Table 1: Overview of lake pigments

| Description | Chemical structure of the dye used for making the lake pigment |
|---|---|
| A3: Sunset Yellow<br>A3 L: Lake Sunset Yellow: Precipitated as Al-salt | 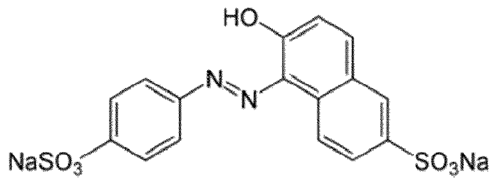 |
| A4: Brilliant Blue FCF<br>A4 L: Lake Brilliant Blue FCF: Precipitated as Al-salt | 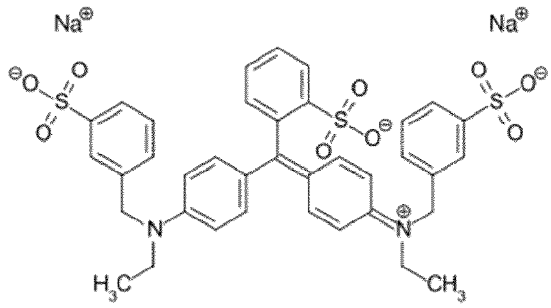 |
| A5: Indigo Carmine<br>A5 L: Lake Indigo Carmine: Precipitated as Al-salt | 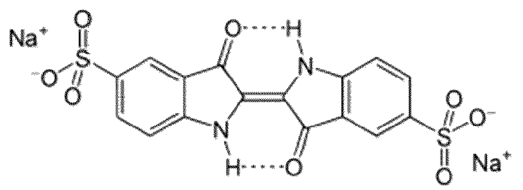 |
| A6: Erythrosine<br>A6 L: Lake Erythrosine: Precipitated as Al-salt | 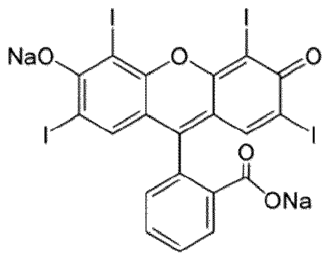 |
| A7: Amaranth<br>A7 L: Lake Amaranth: Precipitated as Al-salt | 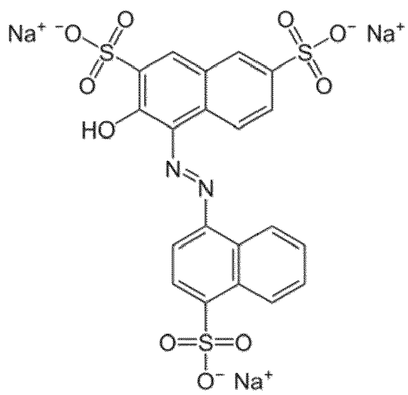 |

(continued)

| Table 1: Overview of lake pigments | |
|---|---|
| Description | Chemical structure of the dye used for making the lake pigment |
| A8: Carmoisine<br>A8 L: Lake Carmoisine: Precipitated as Al-salt | 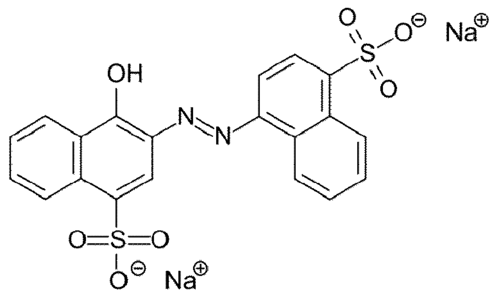 |
| A9: Ponceau 4R<br>A9 L: Lake Ponceau 4R: Precipitated as Al-salt | 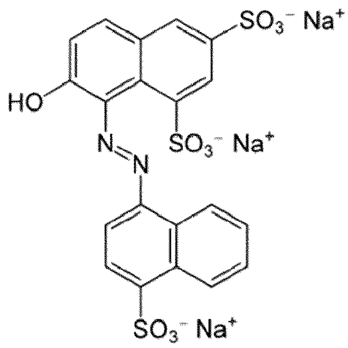 |
| A10: Quinoline Yellow<br>A10 L: Lake Quinoline Yellow: Precipitated as Al-salt | 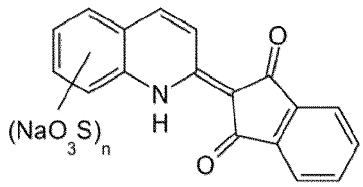 |
| A11: Mordant Blue 9<br>A11 L: Lake Mordant Blue 9: Precipitated as Al-salt | 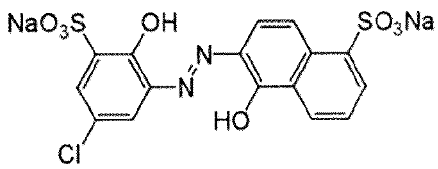 |
| A12 L: Pigment Red 57:1 (Litholrubin BK)<br>Precipitated as Ca-salt: calcium (4Z)-4-[(4-methyl-2-sulfonatophenyl)hydrazono]-3-oxo-2-naphthalenecarboxylate | 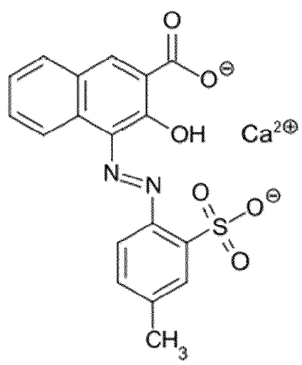 |
| A13 L: Pigment Yellow 62<br>Precipitated as Ca-salt | 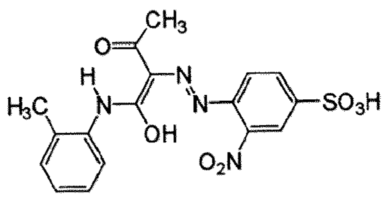 |

(continued)

| Table 1: Overview of lake pigments | |
|---|---|
| Description | Chemical structure of the dye used for making the lake pigment |
| calcium,4-[[4-(2-methylanilino)-2,4-dioxobutyl] diazenyl]-3-nitrobenzenesulfonate | |
| A14 L: Pigment Red 48:2<br>Precipitated as Ca-salt: calcium-4-[(5-chlor-4-methyl-2-sulfonatophenyl)azo]-3-hydroxy-2-naphthoate | 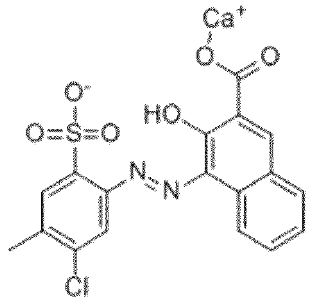 |

The lake pigments A1 L to A10 L and A12 in table 1 have the following color index number and EEC No. as food colorant in the European Union and as FD &C No. as food colorant in the United States of America respectively:

| Table 2: Overview of color index number, EEC No and FD & C No for selected lake pigments | | | | |
|---|---|---|---|---|
| | Common Name | Color Index No. | EEC No. | FD & C No. |
| A1 L | Lake Allura Red | 16035 (PD) | E 129 | Red 40 |
| A2 L | Lake Tartrazine | 19140:1 | E 102 | Yellow 5 |
| A3 L | Lake Sunset Yellow | 15985:1 | E 110 | Yellow 6 |
| A4 L | Lake Brilliant Blue FCF | 42090:2 | E 133 | Blue 1 |
| A5L | Lake Indigo Carmine | 73015 (PD) | E 132 | Blue 2 |
| A6 L | Lake Erythrosine | 45430:1 | E 127 | - |
| A7 L | Lake Amaranth | 16185:1 | E 123 | - |
| A8 L | Lake Carmoisine | 14720:1 | E 122 | - |
| A9 L | Lake Ponceau 4R | 16255:1 | E 124 | - |
| A10 L | Lake Quinoline Yellow | 47005:1 | E 104 | - |
| A12 L | C.I. Pigment Red 57:1 | 15850:1 | E 180 | Red No. 7 |

The lake pigment may be a ready-to-use lake pigment, i.e., a lake pigment comprising additives to ensure a homogenous distribution of the lake pigment in the color masterbatch. Alternatively, the lake pigment may be a lake pigment not comprising any additive.

Functional Component

As already mentioned, the first material comprises for at least 50 wt% based on the weight of the first material the functional component, the functional component consisting of one or more water-soluble polymers and/or one or more water-swellable polymers. In this regard it is preferred that the amount of the functional component in the first material is at least 60 wt%, preferably at least 70 wt% and further preferably at least 75 wt% based on the weight of the first material. This decreases the time during recycling needed for the dissolution and/or disintegration of the first layer considerably.

Water-soluble polymer

Regarding the water-soluble polymer, it is preferred that the water-soluble polymer has a weight loss of more than 5 wt%, preferably more than 10 wt% and further preferably more than 20 wt%, when a sample consisting of the water-soluble polymer is stored in water at 23°C for 24 hours or when emerged in boiling water for 30 min based on the original weight of the sample before being stored in water.

The weight loss of a sample of the water-soluble polymer is preferably determined according to ISO 294-3 (cavity dimensions: W × L × T = 62 × 62 × 1.1 $mm^3$) when stored or treated according to either of the following method 1 or method 2. The weight loss in % is calculated according to:

$$\text{weight loss in \%} = \frac{\text{conditioned weight after test} - \text{conditioned weight before test}}{\text{conditioned weight before test}} \text{ x } 100$$

Before testing specimens of the water-soluble polymer are dried in an oven at 60°C for 48h and then placed in a desiccator to cool. Immediately upon cooling the specimens are weighed. For method 1 the specimens are then emerged in 500 mL of water at 23°C for 24 hours. Specimens are removed, patted dry with a lint free cloth, and weighed. For method 2 the specimens are then emerged in 500 mL of boiling water (100 °C) for 30 min. Specimens are removed, patted dry with a lint free cloth, and weighed.

Water-soluble polymers usually have hydrophilic groups as substituents and/or incorporated into the backbone of the polymer. The hydrophilic groups may be nonionic, anionic, cationic or amphoteric. In other words, the monomer units of water-soluble polymers have a significantly higher number of heteroatoms such as nitrogen (N), oxygen (O), sulfur (S) or halogens (especially F, Cl, Br) compared to water insoluble polymers. This results in a higher polarity and thus better solubility compared to insoluble polymers.

According to another preferred embodiment of the invention, the water-soluble polymer of the functional component of the first material is selected from the group consisting of polyelectrolytes and water-soluble ionic polymers, water-soluble non-ionic polymers, preferably polyvinyl alcohols and polyvinylpyrrolidones, non-ionic homopolymers, hydrophobic-associating polymers, water-soluble polysiloxanes.

a) Polyelectrolytes and water-soluble ionic polymers

Polyelectrolytes are polymers that have charged groups. They can be divided into polycations (positively charged), polyanions (negatively charged) or amphoteres (zwitterions, positively and negatively charged). Polyelectrolytes include proteins, but also numerous synthetically produced polymers.

Useful polyelectrolytes include but are not limited to poly carboxylic acids (collective term), poly acrylic acid (carbomer), poly methacrylic acids, poly maleic acid, maleic acid co- and ter-polymers, poly sulfonic acids such as sodium poly styrene sulfonat, acrylic ester-acrylic acid copolymers as available from Belland Technology, sulfonated acrylic copolymers, poly vinyl sulphuric acid, phosphino poly carboxylates, poly phosphoric acids, alginates, ligno sulphonates, naphtyl sulphonates, anionic starch, carboxy methyle cellulose (CMC), Pectins, quaternary polyamines (collective term), partially hydrolyzed polyacrylamide (HPAM), acrylamide copolymers, Polyvinyl Alcohol/Vinyl CO-AMPS Copolymer (AMPS = 2-Acrylamido-2-methylpropanesulfonic acid), poly vinyl amines, poly ethylene imines, polyquaternium especially Polyquaternium 6 (pDADMAC), dicyandiamide resins, cationic starch, poly vinyl pyridine, poly vinyl ammonium chloride, poly saccharides, acrylamide-acrylic acid-DMAEA-MeCl or DADMAC-acrylic acid, polybetaines in which the charges are paired.

Further useful water-soluble ionic polymers are copolymers of ionic polymers with non-ionic and/or non-polar polymers such as ethylene-acrylic acid copolymers, methacrylic acid-methylmethacrylate- methylacrylate copolymer (E1207), poly (tert-butylacrylate-ethylacrylate-acrylic acid-copolymer (PTBEM) or vinylacetate-crotonic acid copolymers.

b) Water-soluble non-ionic polymers

Preferred are further water-soluble non-ionic polymers such as polyvinyl alcohols or polyvinylpyrrolidones. Polyvinyl alcohol (PVOH) is a polymeric polyhydric alcohol having a secondary hydroxyl group at every other carbon atom of its carbon chain. There are several methods known for the manufacturing of PVOH, the most widely used is the production of PVOH by hydrolysis: Polyvinyl acetate is manufactured by radical polymerization from vinyl acetate as a raw material and then hydrolyzing the polyvinyl acetate under alkaline conditions.

The basic properties of PVOH are typically governed by the degree of polymerization and the degree of hydrolysis. The degree of hydrolysis is indicated in mol% referring to the proportion of the vinyl alcohol units of the total number of all repeating units.

Particularly preferred are polyvinyl alcohols with a degree of hydrolysis of at least 75 mol%. Further preferably the degree of hydrolysis of the polyvinyl alcohol is less or equal to 99.9 mol%. This has the advantage of easily creating a transmission haze ≥ 1.5% for the first layer. In the case of polyvinyl alcohol, strongly hydrolysed PVOHs with a degree of hydrolysis > 75%, preferably > 80%, further preferably > 90%, particularly preferably > 95% and most preferably > 98%

tend to crystallize due to the homogeneous chain structure.

c) Water-soluble non-ionic polymers

Preferably the group of water-soluble non-ionic polymers include but are not limited to polyethylene oxides (also modified ones such as Aquacalk TWB from Sumitomo Seika Chemicals Ltd.), polyethylenglycol, polyethylene oxide-polypropylene oxide copolymers, poly amide, poly-N-vinyl pyrrolidone, poly vinyl imidazole, (N)-vinyl pyrrolidone-vinyl imidazole-copolymers, poly vinyl alcohol (PVAL or PVOH), poly vinyl alcohol/vinyl amin-copolymers, poly vinyl alcohol/vinyl pyrrolidon-copolymers, ethylene-vinyl alcohol copolymers with vinyl alcohol content ≥ 50%, glycerol methacrylate (GMA) (= 2,3-dihydroxypropylmethacylate (DHPMA)), polyacrylamide (PAM), poly(N-(2hydroxypropyl)methacrylamide, acrylamide copolymers, poly(aminoethyl acrylamides), poly(hydroxyethyl acrylates), poly(hydroxypropyl acrylates), poly(vinyl acetate phthalate), poly(vinylmethyl ether) (PVME), methyl cellulose, ethyl cellulose (with an average degree of substitution between 0.8 and 1.3) hydroxyethyl cellulose, hydroxaproyl cellulose or hydroxypropylmethyl cellulose (HPMC).

d) Water-soluble hydrophobically associating polymers

Water-soluble hydrophobically associating polymers (AP) are water-soluble polymers that contain a small number i.e. < 1 mol% of hydrophobic groups attached directly to the polymer backbone.

e) Water soluble polysiloxanes

Water soluble polysiloxanes are polymerised siloxanes or polysiloxanes, which are inorganic-organic polymers with a silicon-oxygen backbone.

Useful water-soluble polymers are available under the tradename Mowiflex from Kuraray Europe GmbH, Selvol from Sekisui, or Sokalan from BASF SE.

<u>Water-swellable polymer</u>

Regarding the water-swellable polymer, it is preferred that the water-swellable polymer has a swelling capacity of ≥ 25 wt%, preferably ≥ 100 wt%, more preferably ≥ 200 wt%. The swelling capacity is preferably determined according to ASTM D570 and/or ISO 62.

Water-swellable polymers are usually crosslinked polymer networks that have hydrophilic groups as substituents and/or incorporated into the backbone of the polymer. Because of the inherent crosslinks, the water-swellable polymer preferably does not dissolve in water. In principle, all the above-mentioned water-soluble polymers that can be covalently or ionically crosslinked are swellable in their crosslinked form. The swelling capacity in a solvent or swelling agent such as water is determined, among other things, by their degree of cross-linking.

According to a preferred embodiment of the invention the water-swellable polymer of the functional component of the first material is selected from the group comprising a crosslinked water-soluble polymer, a cross-linked poly acrylamide and its copolymers, starch, starch derivates, cellulose, cellulose derivatives such as methyl cellulose (MC), microcrystalline cellulose (MCC), ethyl cellulose with an average degree of substitution > 1.3, propyl cellulose, cellulose acetate, cellulose butyrate, hydroxypropylmethyl cellulose (HPMC), ethylhydroxyethyl cellulose (MHEC), hydroxypropyl cellulose (HPC), hydroxyethyl cellulose (HEC), hypromellose phthalate (HPMCP), hypromellose acetate succinate (HPMCAS), cellulose acetate phthalate (CAP), cellulose acetate trimelitate (CAT), sodium carboxymethyl cellulose (NaCMC) and carboxymethylcellulose; crosscarmellose, sodium croscarmellose, crospovidone, sodium starch glycolate, alginic acids, dextrans and cross-linked polyvinylpyrolidones, cross-linked poly(vinyl alcohol) and copolymers such as Ethylene-vinyl alcohol copolymers with different degrees of saponification, cross-linked polyethylene oxide and starch grafted copolymer of polyacrylonitrile.

Useful water-swellable polymers are available under the tradenames Ac-Di-Sol from DuPont de Nemours, Disolcel from chemopharma Chemikalien- und Pharmazeutika Handelsges.m.b.H., Solutab from Roquette Frères, Vivasol from JRS PHARMA GmbH & Co. KG.

According to a preferred embodiment of the invention the first material comprises for at least 50 wt% based on the weight of the first material the functional component, the functional component comprising polyvinyl alcohol. Further preferably the functional component consists of polyvinyl alcohol.

Polyvinyl alcohol not only allows for an easy recycling due to its solubility in water but has also the advantage of having excellent barrier properties for gases, in particular oxygen. In this regard it is preferred that the first layer has an oxygen transmission rate of ≤ 5 $cm^3/(m^2 \cdot day)$, referring to a thickness of the first layer of 100 μm. Further preferred is an oxygen transmission rate of ≤ 3 $cm^3/(m^2 \cdot day)$, and particularly preferred is an oxygen transmission rate of ≤ 1 $cm^3/(m^2 \cdot$

day), referring to a thickness of the first layer of 100 μm.

The oxygen transmission rate is preferably determined according to DIN 53380 and/or ISO 15105-02. The oxygen transmission rate is preferably determined by a flow of nitrogen through a hollow body and by a measurement against a laboratory atmosphere (23 °C, 50% relative humidity). Preferably the device Systech Illinois 8700, OxySense ® oxygen permeability analyzer is used.

According to another preferred embodiment of the invention, the functional component comprises and preferably consists of polyvinyl alcohol having a degree of hydrolysis of at least 75 mol%. It was found that such a degree of hydrolysis enables an efficient solubilization of the first layer in the recycling process.

Particularly preferably the polyvinyl alcohol has a molecular weight of more than 1000 g/mol, preferably more than 10000 g/mol and further preferably more than 50000 g/mol.

Further components in the first material

Besides the functional component, that consists of one or more water-soluble polymers and/or one or more water-swellable polymers, the first material can comprise additional components. These additional components are preferably selected according to their primary function from crosslinking agents, inorganic additives, large organic additives, small organic additives, compatibilizers, and/or dispersing agents. A specific compound can serve more than one function - for example an inorganic additive for influencing the velocity with which the first layer dissolves and/or disintegrates such as $B^{3+}$ or $Al^{3+}$ can at the same time be a physical crosslinking agent, that converts the water-soluble polymer into a water-swellable polymer.

Crosslinking agent

Crosslinking agents can be used to convert the water-soluble polymer into a water-swellable polymer. Crosslinking agents have reactive groups that react with the functional groups of the water-soluble polymers to from covalent or ionical bonds. Since both the crosslinking agent and the water-soluble polymer have numerous functional groups, depending on the dosage and functionality of the crosslinker, a more or less dense three-dimensional network is formed and the water-soluble polymer is converted into a water-swellable polymer.

The crosslinking agents are added to the first material according to the degree of cross-linking to be achieved, preferably in quantities of 0.1 wt% to 10 wt%, more preferably of 0.5 wt% to 5 wt% and especially preferably of 1 wt% to 3 wt% based on the weight of the first material.

Preferably the crosslinking agent is selected from the group comprising glycidyl acrylates copolymers, maleic acid anhydride copolymers, polymers and copolymers grafted with maleic acid anhydride, like of PE, PP or EMA grafted with maleic anhydride, glyoxal, glyoxal resins, polyamidoamin epichlohydrine, modified or non-modified melamine formaldehyde resins, Ti-lactate, boric acid, sodium aluminate, ammonium zirconium carbonate. Useful crosslinking agents are also available under the tradename Orevac or Lotader from Arkema or Yparex from The Compound Company.

Inorganic Additive

According to another preferred embodiment of the invention, the first material further comprises an inorganic additive in an amount of 0.5 wt% to 50 wt%, based on the weight of the first material. Further preferably the amount of the inorganic additive is from 2 wt% to 40 wt%. The inorganic additive has preferably the effect of either accelerating or decelerating the dissolution or disintegration of the first layer. The inorganic additive can also increase the transmission haze of the first layer or decrease the gas transmission rate of the fist layer.

Useful inorganic additives include but are not limited to inorganic halide, carbonate, hydroxide, and/or oxide salts of the I to III main group of the periodic system, in particular salts of alkali metals or alkaline earth metals, salts of boron and aluminum, in particular the polyvalent cations such as $B^{3+}$ and $Al^{3+}$ , preferably in the form of $B(OH)_3$ or $AlCl_3$; hydrotalcite, limestone, talc, silicate minerals and silicates, kaolin, clay minerals, mica, such as iron mica, phlogopite mica or muscovite mica, quartz, wollastonite, bentonite, preferably montmorillonite, barium or sodium sulphate, rock flour, functional fillers such as aluminum trihydroxide and magnesium dihydroxide; and/or silicon dioxide in the form of glass beads, glass fibers, glass flour and/or glass powder.

Furthermore, and in particular in case the functional component consists of polyvinyl alcohol, it is preferred that the first material comprises the inorganic additive in an amount of at least amount of 0.5 wt% based on the weight of the first material. As the addition of the inorganic additive increases the tortuosity of the first material, this has the effect that the barrier properties against gases such as $O_2$ is increased. In other words, the gas transmission rate, and in particular the oxygen transmission rate, of the first layer is reduced when the first material comprises the inorganic additive.

Large Organic Additives

According to another preferred embodiment of the invention, the first material further comprises an organic additive having a molecular weight ≥ 1000 g/mol in an amount of 0.1 wt% to 40 wt%, based on the weight of the first material. Preferably the first material comprises the organic additive in an amount of 1 wt% to 10 wt% based on the weight of the first material. The large organic additive has preferably the effect of either accelerating or decelerating the dissolution or disintegration of the first layer, such that the properties of the layer can be adapted to the specific use case.

Useful large organic additives include but are not limited to polyhydroxyalkanoates such as poly hydroxy butyrate or polyhydroxy hexanoate, polyesters such as poly butylene adipat terephthalat, polybutylene succinate, poly glycolide, polylactide, poly hydroxy propionate or poly ε-caprolactone, glycolized or amorphous aliphatic-aromatic polyesters, polyethylene terephthalate (PET), glycolized or amorphous polyethylene terephthalate (PET-G or PET-A), polytrimethylenterephthalte (PTT); polyamides such as poly caprolactam (PA6), PA 6.6, PA12; polymers or copolymers with acid anhydrides or glycidyl groups such as ethylene or propylene-maleic anhydride copolymers; polyethylene or polypropylene with grafted maleic anhydride units; alkali-soluble resin (ASR), hydrophobically-modified alkali-soluble rheology modifiers (HASE), polybutylenterephthalate (PBT), polyethylene glycol beginning with PEG 39 (HO-(C2H4O)n-H and n ≥ 39); elastomers such as natural rubbers or synthetic rubbers such as styrene-butadiene rubber (SBR), acrylonitrile butadiene rubber (NBR), ethylene propylene diene rubber (EPDM)), thermoplastic elastomers (TPE), fluoro elastomer, silicone rubbers, liquid crystalline elastomers (LCE), and/or mixtures thereof.

A special class of pH-dependent soluble polymers are the copolymers of acrylic acid or methacrylic acid and acrylic acid esters (methyl acrylate, ethyl acrylate, methyl methacrylate, ethyl methacrylate) in various composition ratios, which are used in particular in the medical or pharmaceutical sector in controlled release applications and are sold under the trade name Eudragit.

Further useful organic additives are cotton, jute, hemp, sisal, bagasse, millet, nut shells, wood flour, cork, wheat chaff, cellulose, textile fibers, fabric shreds, coffee grounds, and/or generally prepared waste or by-products from the processing of agricultural products.

Small Organic Additives

According to another preferred embodiment of the invention, the first material further comprises an organic additive having a molecular weight < 1000 g/mol in an amount of 0.1 wt% to 40 wt%, based on the weight of the first material. Preferably the first material comprises the organic additive in an amount of 2 wt% to 25 wt% based on the weight of the first material. The small organic additive has preferably the effect of either accelerating or decelerating the dissolution or disintegration of the first layer, such that the properties of the layer can be adapted to the specific use case.

Useful organic additives include but are not limited to

- carboxylic acids and hydroxycarboxylic acids such as citric acid, tartaric acid, maleic acid, adipic acid, sebacic acid, terephthalic acid, fatty acids and their salts with elements of the I to III main group of the periodic system, in particular salts of alkali metals or alkaline earth metals;
- ethers and/or esters of the above-mentioned carboxylic acids and hydroxycarboxylic acids, and/or fatty acids such as acetyl tributyl citrate (ATBC), triethyl citrate, citric acid esters and fatty acid esters of mono-, diglycerides and/or polyglycerides and polyols such as E471, E472, E475 to E477, E481 to E483, E491 to E495, azelaic esters and/or trimellitate esters,
- fatty alcohols, polyols, polyhydric alcohols such as glycol, di- or triethylene glycol, glycerol, pentaerythritol and/or neopentyl glycol, polyol esters and ethers of pentaerythritol and/or neopentyl glycol such as Glycerol triacetate (GTA), neopentyl glycol oleate and/or cocoate, glycerol mono-, di- and/or tri-oleate,
- polyethylene glycol up to PEG 38 (HO-(C2H4O)n-H and n < 39);
- amines, di-amines, and/or polyamines; amides, diamides, urea;
- aminopolycarboxylic acids;
- glycol ether, dialkyl glycols or glycol ethers such as ethylene glycol monomethyl ether, ethylene glycol monoethyl ether, ethylene glycol monopropyl ether, ethylene glycol monobutyl ether, ethylene glycol monophenyl ether, ethylene glycol monobenzyl ether, propylene glycol methyl ether, diethylene glycol monomethyl ether, diethylene glycol monoethyl ether, diethylene glycol mono-n-butyl ether, dipropyleneglycol methyl ether, ethylene glycol dimethyl ether, ethylene glycol diethyl ether, ethylene glycol dibutyl ether, ethylene glycol methyl ether acetate, ethylene glycol monoethyl ether acetate, ethylene glycol monobutyl ether acetate or propylene glycol methyl ether acetate.

Compatibilizer

While the inorganic additive, the large organic additive and the small organic additive are added to the first

material with the purpose of influencing the dissolution or disintegration rate of the first layer, further components can be added to the first material having the purpose to enhance the compatibility of the water-soluble polymer and/or the swellable polymer of the functional component with the inorganic additive, the large organic additive and/or the small organic additive. Furthermore, the compatibilizer can be added to enhance the compatibility of the first layer with the second and/or third layer and thus increase the stability of the sheet material, the packaging container and/or the flexible composite.

In context to this and according to a preferred embodiment of the invention, the first material preferably further comprises a compatibilizer in an amount of 0.1 wt% to 25 wt%, based on the weight of the first material. Preferably the amount of compatibilizer is 1 wt% to 10 wt%, based on the weight of the first material.

Preferred compatibilizers are selected from the group comprising nonionic surfactants such as ethylene ethoxylate, ethoxylates of fatty acids, ethoxylates of fatty alcohols; and/or gemini surfactants, ionic surfactants.

Further useful compatibilizers are selected from esters and hydrocarbons, aromatic and non-aromatic carboxylic acid esters, such as acetyltributylcitrate (ATBC), ethyl acrylate, penta erythritol esters such as pentaerythritol mono-, di-, tri or tetrastearate or pentaerythritol monooleate, montanic acid ester, aliphatic esters of C4- C7 dicarboxylic acids, preferably adipic acid dibutylester and glutaric acid dibutlyester, fatty acid esters, ethoxylated fatty acid, poly oxyethylated compounds derived from sorbitol and oleic acid, polysorbate 20, polysorbate 40, polysorbate 60, polysorbate 65, polysorbate 80, polymers that are fatty acid-based with a non-ionic group per molecule, acrylate-copolymers, acrylate/styrene copolymers, fatty acid derivatives, polyalkoxylates; polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer having a MW of 5000 to 30000 g/mol and their copolymers. The polyacrylate polymers may be preferably selected from the Efka® 4000 series from BASF SE.

Further preferred compatibilizers are low molecular weight (< 300 g/mol) cyclic esters and amides (lactones, lactams), which are converted into water-soluble hydroxycarboxylates or aminocarboxylates such as ε-caprolactone or ε-caprolactam on saponification.

Exemplary compatibilizers are alkoxylated, preferably ethoxylated or ethoxylated and propoxylated, fatty acid alkyl esters preferably containing 1 to 4 carbon atoms in the alkyl chain, more particularly the fatty acid methyl esters. The alkoxylated alcohol dispersing agents mentioned above includes end caped alkoxylated alcohol dispersing agents. Exemplary nonionic low alkoxylated alcohol compatibilizers that can be used are alkoxylated alcohols containing 1 to 4 ethylene oxide groups (1-4EO), 1 to 4 butylene oxide groups (1-4BO), 1 to 4 propylene oxide groups (1-4PO), end caped alkoxylated alcohol compatibilizers thereof or mixtures thereof. Advantageously low alkoxylated alcohols are useful according to the invention, particularly primary and/or branched alcohols, preferably containing 8 to 18 carbon atoms, and containing 1 to 4 ethylene oxide groups (1-4EO), 1 to 4 butylene oxide groups (1-4BO), 1 to 4 propylene oxide groups (1-4PO), end caped alkoxylated alcohol compatibilizers.

Exemplary nonionic higher alkoxylated alcohol compatibilizers suitable for use in the first material are alkoxylated alcohols containing 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO) groups, end caped alkoxylated alcohol compatibilizers thereof, or mixtures thereof.

Advantageously higher alkoxylated alcohols useful as compatibilizers are particularly linear and/or branched alcohols, preferably containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol compatibilizers thereof. The alcohol radical may be linear, branched, or may contain a mixture.

Particularly preferred are higher alkoxylated alcohols, preferably alcohol ethoxylates with linear or branched radicals of alcohols with 12 to 18 carbon atoms, e.g. from coco-, palm-, tallow- or oleyl alcohol, containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. However, most preferred is isotridecyl alcohol with 6EO to 14EO, 6PO to 14PO, 6BO to 14BO, preferably 7EO to 10EO, 7PO to 10PO, 7BO to 10BO, and most preferred 8EO, 8PO, 8BO, or a mixture thereof.

According to a preferred embodiment higher alkoxylated alcohols can be used with 5EO, 6EO, 7EO, 8EO, 9EO, 10EO, 11EO, 12EO, 13EO, 14EO, 15EO, 16EO,17EO, 18EO, 19EO, 20EO, 21EO, 22EO, 23EO, 24EO or 25EO, 5PO, 6PO, 7PO, 8PO, 9PO, 10PO, 11PO, 12PO, 13PO, 14PO, 15PO, 16PO,17PO, 18PO, 19PO, 20PO, 21PO, 22PO, 23PO, 24PO or 25PO, 5BO, 6BO, 7BO, 8BO, 9BO, 10BO, 11BO, 12BO, 13BO, 14BO, 15BO, 16BO,17BO, 18BO, 19BO, 20BO, 21BO, 22BO, 23BO, 24BO or 25BO, end caped alkoxylated alcohol compatibilizers thereof, or a mixture thereof.

Exemplary higher alkoxylated alcohols with 5EO to 40EO, preferably 6EO or 30EO, further preferred 7EO to 20EO, more preferred 8EO to 10EO and most preferred 8EO; 5PO to 40PO, preferably 6PO or 30PO, further preferred 7PO to 20PO, more preferred 8PO to 10PO and most preferred 8PO; 5BO to 40BO, preferably 6BO or 30BO, further preferred 7BO to 20BO, more preferred 8BO to 10BO and most preferred 8BO include $C_{12}$-$C_{14}$-alcohols; $C_9$-$C_{11}$-alcohols, $C_{13}$-$C_{15}$- alcohols, $C_{12}$-$C_{18}$-alcohols, end caped alkoxylated alcohol compatibilizers thereof, and mixtures thereof, as well as mixtures of $C_{12}$-$C_{14}$-alcohols and $C_{12}$-$C_{18}$ -alcohols, end caped alkoxylated alcohol compatibilizers thereof, and most preferred is a $C_{13}$-alcohol.

In addition to these compatibilizers, fatty alcohols containing more than 12 EO, 12 PO, 12 BO may also be used. Examples of such fatty alcohols are tallow fatty alcohol containing 14 EO, 25 EO, 30 EO or 40 EO, 14 PO, 25 PO, 30 PO or 40 PO, 14 BO, 25 BO, 30 BO or 40 BO and end caped alkoxylated alcohol compatibilizers thereof. The degrees of 5EO to 40EO, 5PO to 40PO, 5BO to 40BO preferably 6EO or 30EO, 6PO or 30PO, 6BO or 30BO, further preferred 7EO to 20EO, 7PO to 20PO, 7BO to 20BO, more preferred 8EO to 10 EO, 8PO to 10 PO, 8BO to 10 BO and most preferred 8EO, 8PO, 8BO alkoxylation mentioned are statistical mean values, which for a special product, may be either a whole number or a fractional number. However, more preferred, the degrees of 5EO to 40EO, 5PO to 40PO, 5BO to 40BO preferably 6EO or 30EO, 6PO or 30PO , 6BO or 30BO further preferred 7EO to 20EO, 7PO to 20PO , 7BO to 20BO, more preferred 8EO to 10 EO, 8PO to 10 PO, 8BO to 10 BO and most preferred 8EO, 8PO, 8BO alkoxylation mentioned may be either a whole number or a fractional number. Most preferred, the degrees of 5EO to 40EO, 5PO to 40PO, 5BO to 40BO, preferably 6EO or 30EO, 6PO or 30PO, 6BO or 30BO, further preferred 7EO to 20EO, 7PO to 20PO, 7BO to 20BO, more preferred 8EO to 10 EO, 8PO to 10PO, 8BO to 10BO and most preferred 8EO, 8PO, 8BO. The alkoxylation grade mentioned may be a whole number. Preferred higher alkoxylated alcohols have a narrow homolog distribution (narrow range ethoxylates, NRE).

Further compatibilizers include alkoxylated long chain fatty acid amides where the fatty acid has 8-20 carbon atoms and the amide group is alkoxylated with 1-20 ethylene oxide, propylene oxide and/or butylene oxide units.

A further class of compatibilizers, which can be used in the first material, is that of the alkyl polyglycosides (APG). Suitable alkyl polyglycosides satisfy the general Formula RO(G)z where R is a linear or branched, particularly 2-methyl-branched, saturated or unsaturated aliphatic radical containing 8 to 22 and preferably 12 to 18 carbon atoms and G stands for a glycose unit containing 5 or 6 carbon atoms, preferably glucose. The degree of oligomerization z is a number between 1.0 and 4.0 and preferably between 1.1 and 1.4.

Silicone containing nonionic compatibilizers, such as the ABIL B8852 or Silwet 7602, can also be used. An exemplary silicone-containing compatibilizers is silicone polybutane.

Examples of amine oxide compatibilizers include: dimethyldodecylamine oxide, dimethyltetradecylamine oxide; ethylmethyltetradecylamine oxide, cetyldimethylamine oxide, dimethylstearylamine oxide, cetylethylpropylamine oxide, diethyldodecylamine oxide, diethyltetradecylamine oxide, dipropyldodecylamine oxide, lauryl dimethyl amine oxide, bis-(2-hydroxyethyl) dodecylamine oxide, bis- (2-hydroxyethyl)-3-dodecoxy-1- hydroxypropyl amine oxide, (2-hydroxypropyl) methyltetradecylamine oxide, dimethyloleyamine oxide, dimethyl- (2-hydroxydodecyl) amine oxide, and the corresponding decyl, hexadecyl and octadecyl homologs of the above compounds.

Additional nitrogen-containing compatibilizers include ethoxylated primary alkyl amines where the alkyl group has 10-20 carbon atoms and the amine is ethoxylated with 2-20 ethylene oxide units.

Additionally, non-ionic compatibilizers derived from the condensation of ethylene oxide with the product resulting from the reaction of propylene oxide and ethylene diamine are also useful in the coloring bath. For example, there are compounds containing from 40% to 80% of polyoxyethylene by weight and having a molecular weight from 5000 to 11000 resulting from the reaction of ethylene oxide groups with a hydrophobic base constituted of the reaction product from ethylene diamine and excess propylene oxide wherein the base has a molecular weight on order of 2500-3000.

Suitable nonionic compatibilizers include the polyoxyethylene-polyoxypropylene condensates, which are sold by BASF under the trade name 'Pluronic', polyoxyethylene condensates of aliphatic alcohols/ethylene oxide condensates having from 1 to 30 moles of ethylene oxide per mole of coconut alcohol; ethoxylated long chain alcohols sold by Shell Chemical Co. under the trade name 'Neodol', polyoxyethylene condensates of sorbitan fatty acids, alkanolamides, such as the monoalkoanolamides, dialkanolamides and the ethoxylated alkanolamides, for example coconut monoethanolamide, lauric isopropanolamide and lauric diethanolamide; and amine oxides for example dodecyldimethylamine oxide. Further exemplary compatibilizer include alkylphenol alkoxylates, and amine oxides such as alkyl dimethylamine oxide or bis (2- hydroxyethyl) alkylamine oxide.

Typical ionic surfactants as compatibilizers are anionic compatibilizers, including ammonium salts or alkali salts of carboxylic, sulfamic or phosphoric acids, for example, sodium lauryl sulfate, ammonium lauryl sulfate, lignosulfonic acid salts, ethylene diamine tetra acetic acid (EDTA) sodium salts and acid salts of amines such as laurylamine hydrochloride or

poly(oxy-1,2 ethanediylphenyl)alpha-sulfo-omega-hydroxy ether with phenol 1-(methylphenyl)ethyl derivative ammonium salts; or amphoteric, that is, compounds bearing both anionic and cationic groups, for example, lauryl sulfobetaine; dihydroxy ethylalkyl betaine; amido betaine based on coconut acids; disodium N-lauryl amino propionate; or the sodium salts of dicarboxylic acid coconut derivatives. Further exemplary ionic compatibilizers include fatty alcohol ether sulphates, olefin sulphonates, fatty acid derivatives, phosphoric acid esters or lignin sulphonates.

Exemplary anionic compatibilizers include organic carboxylates, organic sulfonates, organic sulfates, organic phosphates and the like, particularly linear alkylaryl sulfonates, such as alkylarylcarboxylates, alkylarylsulfonates, alkylarylphosphates, and the like. These classes of anionic dispersing agents are known within as linear alkyl benzyl sulfonates (LABS), alpha olefin sulfonates (AOS), alkyl sulfates, and secondary alkane sulfonates.

Suitable cationic compatibilizers include quaternary ammonium compounds having the formula of $RR'R''R'''N^+X^-$, where R, R', R'' and R''' are each a $C_1$-$C_{24}$ alkyl, aryl or arylalkyl group that can optionally contain one or more P, O, S or N heteroatoms, and X is F, Cl, Br, I or an alkyl sulfate. Additional preferred cationic compatibilizers include ethoxylated and/or propoxylated alkyl amines, diamines, or triamines.

Dispersing agent

In order to improve mixing behavior of the inherently incompatible components within the first material and thus increase the color homogeneity of the first layer as well as in order to increase the processability of the sheet material by increasing the compatibility of the first layer to the second and/or third layer, the first material preferably further comprises a dispersing agent in an amount of 0.1 wt% to 25 wt%, based on the weight of the first material. Preferably, the amount of the dispersing agent in the first material is 0.1 wt% to 10 wt%, preferably 1 wt% to 5 wt%.

Useful dispersing agents include but are not limited to copolymers of vinyl alcohol and butanediol, polyethylene-acrylate-copolymer, polypropylene-acrylate-copolymer; polyethylene-polypropylene-acrylate-terpolymer, ethylene vinyl alcohol; Polyethylene-graft-maleic anhydride, Polypropylene-graft-maleic anhydride; Poly(ethylene-co-glycidyl methacrylate), Poly(ethylene-co-glycidyl acrylate), copolymer of Polyethylene-graft-maleic anhydride and Poly(ethylene-co-glycidyl methacrylate); and/or styrene-acrylonitrile-glycidyl methacrylate terpolymers.

**Second and/or third material**

In the following aspects of the second and/or third material are described. As already mentioned, according to the invention, the second layer consists of the second material, the second material comprising paper, non-woven textile, woven textile, a metal, preferably aluminum, a glasslike layer comprising $SiO_x$, $AlO_x$ and/or C, a radiation cured coating, a physically or chemically cross-linked coating, a layer solidified by evaporation of a solvent (water or organic solvent) and/or a water-insoluble polymer; and the third layer consists of the third material, the third material comprising paper, non-woven textile, woven textile, a metal, preferably aluminum, a glasslike layer comprising $SiO_x$, $AlO_x$ and/or C, a radiation cured coating, a physically or chemically cross-linked coating, a layer solidified by evaporation of a solvent (water or organic solvent) and/or a water-insoluble polymer.

According to a preferred embodiment of the invention the second material comprises at least 80 wt% of the water-insoluble polymer, based on the weight of the second material such that the second layer is a water-insoluble layer; and/or wherein the third material comprises at least 80 wt% of the water-insoluble polymer, based on the weight of the third material such that the third layer is a water-insoluble layer. Particularly preferably the second and the third material comprise at least 80 wt% of the water-insoluble polymer. It simplifies the recycling process when also the second and/or third layer and preferably the second and the third layer are plastic layers.

Preferably being a water-insoluble layer means that the water-insoluble layer has a weight change of less than 3.5 wt%, preferably less than 1 wt% and more preferably less than 0.5 wt% when stored in water at 23°C for 24 hours or when emerged in boiling water for 30 min.

The weight change of the second and/or third layer - i.e. the weight change of the water-insoluble layer- is preferably determined according to ISO 294-3 (cavity dimensions: $W \times L \times T = 62 \times 62 \times 1.1\ mm^3$) when stored or treated according to either of the following method 1 or method 2. The weight change in % is calculated according to:

$$\text{weight change in \%} = \frac{\text{conditioned weight after test} - \text{conditioned weight before test}}{\text{conditioned weight before test}} \times 100$$

Before testing specimens of the second layer, or specimens of the third layer are dried in an oven at 60°C for 48h and then placed in a desiccator to cool. Immediately upon cooling the specimens are weighed. For method 1 the specimens are then emerged in 500 mL of water at 23°C for 24 hours. Specimens are removed, patted dry with a lint free cloth, and weighed. For method 2 the specimens are then emerged in 500 mL of boiling water (100 °C) for 30 min.

Specimens are removed, patted dry with a lint free cloth, and weighed.

Water-insoluble polymer

According to another preferred embodiment of the invention, the water-insoluble polymer is selected from: Polyolefins such as Polyethylene (PE) (HDPE, LDPE, LLDPE, MDPE) or polypropylene (PP) and their copolymers, Polystyrole (PS), Polyesters such as polyethylen terephthalate (PET), polybutylen terephthalate (PBT), Polytrimethylen terephthalate (PTT), glycolized or amorphous polyethylene terephthalate (PET-G or A-PET), Polyesters such as Polycarabonate (PC), amorphous aliphatic-aromatic polyesters, polybutylene succinate (PBS), polybutylene adipate terephthalate (PBAT), and their copolymers, poly butylene (PB-1), poly glycolide, polylactide, poly hydroxy propionate or poly ε-caprolactone, and their copolymers; Polyhydroxyalkanoates such as poly hydroxy butyrate or polyhydroxy hexanoate, and their copolymers, Polyacrylates such as polymethylmethacrylate (PMMA), Polyvinyl halogenides such as polyvinylchloride (PVC) or polyvinylidene chloride (PVDC), Polyoxymethylen (POM), polyamides such as poly caprolactam (PA6, PA 6.6, PA12), acrylonitrile and acrylonitrile copolymers such as Acrylonitrile butadiene styrene (ABS), or Acrylonitrile styrene acrylate (ASA), polyurethanes, and mixtures thereof

**Material of the further layer**

As the further layer should enhance the adhesion of the first layer to the second layer or the first layer to the third layer, the further layer preferably comprises at least one polymer that is also present in the second material or in the third material, preferably one or more of the above water-insoluble polymers - and one or more of the compatibilizers and/or dispersing agents named above for the first material.

Further preferably, the further layer has two different polarities, where one polarity is similar or equal to the polarity of the first layer and the other polarity is similar or equal to the polarity of the second and/or third layer. Furthermore, the further layer may contain reactive groups which react with either the first material or the second material or different reactive groups which react with the first material and the further different reactive groups with the second and/or third material.

Mw of polymer

For polymers the individual polymer chains rarely have exactly the same degree of polymerization and molar mass, and there is a distribution around an average value (molecular weight distribution (MWD)). To this regard, the molecular weight of a polymer in this application is given with respect to the Mass average molar mass or Mw (also commonly referred to as weight average or Weight Average Molecular Weight (WAMW)).

The mass average molecular mass can be determined by gel permeation chromatography, static light scattering, small angle neutron scattering, X-ray scattering, and/or sedimentation velocity. Preferably the mass average molecular mass is determined by gel permeation chromatography. Furthermore, in case the distribution is known, the mass average molecular mass can be calculated by

$$\bar{M}_w = \frac{\sum_i N_i M_i^2}{\sum_i N_i M_i}$$

where $N_i$ is the number of molecules of molecular mass $M_i$.

The water-soluble polymer as well as the water-swellable polymer in the functional component preferably have a molecular weight Mw ≥ 1000 g/mol, preferably Mw ≥ 1200 g/mol, more preferably Mw ≥ 1500 g/mol. Furthermore, the water-insoluble polymer in the second material and the water-insoluble polymer in the third material preferably have a molecular weight Mw ≥ 1000 g/mol, preferably Mw ≥ 1200 g/mol, more preferably Mw ≥ 1500 g/mol.

**Recycling the sheet material and/or the packaging container**

As already mentioned, it is also an object of the invention to provide a method for recycling the sheet material or the packaging container comprising the steps of:

- shredding the sheet material, the packaging container, or the flexible composite to flakes, granulates and/or a powder,
- exposing the flakes, granulates and/or or powder to an aqueous washing solution;
- separating solid components from the aqueous washing solution.

According to a preferred embodiment of the invention, the aqueous washing solution comprises at least 80 wt%, preferably at least 85 wt% and further preferably at least 90 wt% water, based on the total weight of aqueous washing solution. Thus, the recycling process is environmentally friendly and cost efficient.

The aqueous washing solution can comprise further components, that make the dissolution and/or disintegration of the first layer more efficient, and/or help prevent that the coloring agent that preferably is solubilized in the aqueous washing solution does not adhere and/or stick to the solid components - i.e. preferably the solids of the second and/or third layer - in the washing solution and thus no resoiling through resorption of the coloring agent occurs.

In context to this and according to a preferred embodiment of the invention, the aqueous washing solution comprises water, and optionally one of

- an oxidizing agent or a reducing agent,
- a nonpolar organic solvent,
- a polar organic solvent,
- an ionic or non-ionic surfactant,
- a chelation agent,
- a resoiling inhibitor,
- solvent additives;
- an acid and/or base to adjust a pH of the aqueous washing solution.

Oxidizing agent

Preferred oxidizing agents are selected from the group comprising peroxide, peroxyacetic acid, hydrogen peroxide, peroxodisulfate, ozone, sodium percarbonate, sodium perborate, m-Nitrobenzolsulfonat, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromat $BrO_3^-$, halogens, such as fluorine, chlorine, bromine and iodine, hypochlorite, sodium hypochlorite, and/or potassium hypochlorite; hypochlorous acid. The oxidizing agents may be used together with bleach activators such as Tetraacetylethylenediamine.

Reducing agents

Preferred reducing agents are selected from the groups comprising

- hydrogen in combination with precious metal catalyst, preferably $H_2$/Ni, $H_2$/Pd, $H_2$/Pt, hydrides;
- complex hydrides, preferably sodium hydride NaH, lithium aluminum hydride LiAlH4, borohydride salts $NaBH_4$;
- base metals, preferably Li, Na, Mg, Zn; low-valent nitrogen;
- phosphorus and sulphur compounds, preferably amidine sulfonic acid, formamidine sulphinic acid, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfonic acid, zinc hydroxymethanesulfinate, sodium hydroxymethanesulfinate also known as rongalite, thiourea dioxide also known as thiox, sulfonic acid and its derivatives, sodium carbonate, sodium bicarbonate, sodium oxide, calcium oxide;
- sulfinic acid and sulfinic acid derivates, preferably aminoimino methansulfinic acid;
- glucose mixtures with dispersants; and
- formamidine sulphinic acid and zinc hydroxymethanesulfinate.

Nonpolar organic solvent

The nonpolar organic solvent may be selected from the group comprising straight, branched, saturated, unsaturated, and/or cyclic aliphatic C5 to C12 hydrocarbons, and aromatic C6 to C12 hydrocarbons, singly or multiply $C_1$ to $C_5$ - alkyl substituted benzene, singly or multiply $C_3$ - alkyl substituted benzene, 1,3,5-trimethylbenzene (mesitylene), 1-ethyl-4-methylbenzene, prop-1-en-2-ylbenzene, propan-2-ylbenzene, propyl benzene, $C_7$ aromatic hydrocarbons, preferably toluene, $C_8$ aromatic hydrocarbons, preferably methyl substituted benzene (xylene), $C_9$ to $C_{20}$ aromatic hydrocarbons and solvent naphtha. A preferred nonpolar solvent is a C9-aromatic hydrocarbon.

Further preferred non-polar organic solvents are n-Heptan or one or more of its isomers, n-Octan or one or more of its isomers, n-Nonan or one or more of its isomers, n-Decan or one or more of its isomers, n-Undecan or one or more of its isomers, Cyclohexan, $C_1$ to $C_4$ alkyl-substituted Cyclohexane, Decalin, or mixtures of theses aliphatic and/or cyclic hydrocarbons. A preferred non-polar organic solvent mixture is light petrol 100/140 ($C_7$ - $C_9$-aliphatic hydrocarbons boiling from 100°C to 140°C). Further preferred non-polar solvents are biobased non-polar solvents like terpenes, especially

mono cyclic terpenes such as menthane, limonene, terpinolene or p-Cymol. Solvent naphtha is also called aromatic naphtha. The mixture called solvent naphtha preferably comprises $C_9$ to $C_{13}$ aromatic hydrocarbons and/or $C_7$ to $C_{10}$ aromatic hydrocarbons, produced from natural gas condensates, petroleum distillates and/or the distillation of coal tar and peat. It may comprise naphthalene, indene, phenol, $C_3$-Benzenes, toluene, xylene, and/or benzofuran. The solvent naphtha may be made according to DIN-Norm 51633 (1986-11).

Polar organic solvent

The polar organic solvent may be selected from the group comprising $C_1$ to $C_6$ - alcohol, preferably ethanol and isopropanol, glycols such as diethylene glycol and its oligomers and ethers, $C_3$ to $C_6$ - ketone, preferably acetone, $C_2$ to $C_6$ - aldehyde, $C_1$ to $C_6$ - carboxylic acid and their derivatives such as acid chlorides or acid amides, other polar solvents liquid at 23 °C, preferably dimethylsulfoxide (DMSO), dimethylformamide (DMF), benzylic alcohols such as benzyl alcohol, linear or cyclic aliphatic ethers, preferably diethyl ether, diisopropyl ether, dibutyl ether or tetrahydrofuran, aliphatic esters such as methyl acetate, ethyl acetate, butyl acetate, halogenated solvents such as dichloromethane or trichloromethane or benzyl chloride.

Further preferred polar organic solvents are $C_1$ to $C_{15}$ - alcohol, propanol, butanol, pentanol, hexanol, heptanol, octanol, nonanol, decanol, undecanol, dodecanol, tridecanol, tetradecanol, pentadecanol and its isomers, more preferred $C_3$ to $C_{15}$ - alcohols, and furthermore preferred $C_9$ to $C_{12}$ - alcohols, and further $C_3$ to $C_{15}$ diols such as propanediol, butanediol or pentanediol or triols such as glycerol. Further preferred polar solvents are N-methyl (NMP) and N-ethyl pyrrolidon (NEP), $\gamma$-valerolactone (GVL), or tetra hydrofurfuryl alcohole (THFA), and biobased polar solvents like terpenoides.

Ionic or non-ionic surfactant

The aqueous washing solution optionally comprises ionic or non-ionic surfactants. Particularly when separating and decoloring multi-layer composites from a post-consumer waste stream, this simultaneously removes adhering impurities from the surface of the various layers. Without being bound to a specific theory it is believed that the increased miscibility of the non-polar organic solvent component with water effected by the ionic and/or non-ionic surfactant increases the affinity of the contaminant to the washing solution and thus increases decontamination efficiency.

With regard to the non-ionic surfactant, the non-ionic surfactant is preferably selected from the group comprising aromatic esters, aromatic and non-aromatic carboxylic acid esters, ethyl acrylate, fatty acid esters, alkoxylated, preferably ethoxylated or ethoxylated and propoxylated fatty acid esters, alkoxylated, preferably ethoxylated or ethoxylated and propoxylated fatty acids, poly oxyethylated compounds derived from sorbitol and oleic acid, polysorbate 20, polysorbate 40, polysorbate 60, polysorbate 65, polysorbate 80, polymers that are fatty acid-based with a non-ionic group per molecule, acrylate-copolymers, acrylate/styrene copolymers, fatty acid derivatives, polyalkoxylate, and preferably 2-(2-butoxy-ethoxy)ethanol and particular preferably isotridecanolethoxylate.

Further preferred surfactants are gemini surfactants. Gemini surfactants are preferably surfactants that comprise two hydrophilic head groups and two hydrophobic tails linked by a spacer at the head groups or closed to the head groups. Thus, the gemini surfactant has the following polarity: hydrophobic - hydrophilic -spacer- hydrophilic - hydrophobic. When both hydrophobic tails are the same and the hydrophilic head groups are identical to each other, then gemini surfactants have symmetric structures.

Further typical surfactants include but are not limited to betaine surfactants, ethoxylated or propoxylated alkyl or aryl phenolic compounds, such as, octylphenoxypolyethyleneoxyethanol or poly(oxy-1,2-ethanediyl)alpha-phenyl-omega-hydroxy, styrenated. Another preferred tenisde may be a mixture of $C_{14}$-$C_{18}$ and $C_{16}$-$C_{18}$ ethoxylated unsaturated fatty acids and poly(oxy-1,2-ethanediyl)alpha-sulfo-omega-hydroxy ether with phenol 1-(methylphenyl)ethyl derivative ammonium salts and poly(oxy-1,2-ethanediyl), alpha-phenyl-omega-hydroxy, styrenated.

According to another preferred embodiment, aromatic ester may be used as non-ionic surfactants. The aromatic esters are preferably selected from benzoic acid benzyl esters, naphthalic acid benzyl esters, phthalic acid benzyl esters and/or isophthalic acid benzyl esters, mixed aromatic aliphatic esters comprising benzyl butyl phthalates, and aliphatic esters comprising benzoic acid butyl esters, phthalic acid dibutyl esters, and/or isophthalic acid dibutyl esters; and preferably benzoic acid benzyl ester, benzoic acid esters such as benzyl benzoate, alkyl benzoates such as methyl or ethyl benzoate, naphthalic acid esters, phthalic acid esters.

Further preferably the anionic surfactant is preferably selected from the group comprising alkaline salts of a sulfonic acid, wherein the sulfonic acid is preferably selected form the group comprising alkyl benzenesulfonic acid, alkyl naphtalenesulfonic acid, alkyl phthalic sulfonic acid, isophthalic sulfonic acid benzyl, and $C_9$-$C_{13}$-alkyl benzenesulfonic acid. Further preferably the anionic surfactant is preferably selected from the group comprising alkaline salts of sulfonic acids or carbonic acids of aliphatic linear or branched hydrocarbons.

Suitable cationic surfactants include quaternary ammonium compounds having the formula of $RR'R''R'''N^+X^-$,

where R, R', R" and R"' are each a H, $C_1$-$C_{24}$ alkyl, aryl or arylalkyl group that can optionally contain one or more P, O, S or N heteroatoms, and X is F, Cl, Br, I or an alkyl sulfate. Additional preferred cationic dispersing agents include ethoxylated and/or propoxylated alkyl amines, diamines, or triamines. Further pereferably the cationic surfactant is preferably selected from the group comprising ammonium salts of aliphatic linear or branched hydrocarbons like Cetyltrimethylammoniumbromide (CTAB),

Last but not least, amphoteric surfactants that contain anionic and cationic functional groups may be used. In general, the compounds listed under dispersing agents can also be used as surfactants.

Chelating agent

Preferred chelating agents are selected from salts of ethylenediaminetetraacetic acid (EDTA), Ethylenediamine-N,N'-disuccinic acid (EDDS), Nitrilotriacetic acid (NTA), iminodisuccinic acid (IDS), polyaspartic acid, S,S-ethylenediamine-N,N'-disuccinic acid (EDDS), methylglycinediacetic acid (MGDA), and L-Glutamic acid N,N-diacetic acid, tetrasodium salt (GLDA). The chelating agent preferably is a sodium salt. Furthermore, preferably the chelating agent is by itself water soluble.

Resoiling inhibitor

Further preferably the resoiling inhibitor is selected from the group comprising

- polymeric resoiling inhibitors, in particular polyvinylpyrolidone (PVP), derivatives of polyvinylpyrolidone, such as poly(4-vinylpyridine-N-oxide) and/or polyvinylpyrolidone-Betaine, copolymers formed of vinylpyrrolidone and vinylimidazole, copolymers formed of vinylpyrrolidone and Poly-4-vinylpyridine-N-oxide, sulfonates comprising an aromatic group, salts of polydiallyldimethylammonium, for example PolyDADMAC, copolymers of polydiallyldimethylammonium formed with acrylic and/or methacrylic acid, copolymers of polydiallyldimethylammonium formed with acrylamide and/or vinylpyrrolidone, saccharide / acrylate copolymers, polycarboxylic acids and copolymers, acrylate copolymers, polymeric carboxylic acid containing polyphosphates, amphiphilc blockcopolymers, polyquaterniums; polyvinylimidazole and copolymers of polyvinylimidazole for example with polyviniylpyrrolidone;
- ionic compounds comprising polymeric metasilicate anions such as waterglass;
- phosphonates,
- dye transfer inhibitors comprising a combination of a) hydrocarbyl substituted pyridine or a polymer or oligomer including vinylpyridine monomer units and b) a hydrocarbyl sulfonic acid such as 2-acrylamido-2-methylpropane sulfonic acid monomer or a polymer formed from said monomer
- surfactant-free colloid systems based on inorganic salts, such as Disodium metasilicate pentahydrate or colloid systems based on phosphates.

Solvent additive

With respect to the result of the decolorization and separation process by dissolving and/or disintegrating the first layer, it may be advantageous when the aqueous washing solution further comprises a solvent additive. Solvent additives of the aqueous washing solution may be selected from the group comprising inorganic acids, preferably sulfonic acid, $C_3$ to $C_6$ - ketone, preferably acetone, $C_2$ to $C_6$ - aldehyde, $C_1$ to $C_6$ - carboxylic acid and their derivatives such as acid chlorides or acid amides, polar aromatic solvents liquid at 23 °C, preferably DMSO, DMF, benzylic alcohols, linear or cyclic aliphatic ethers, preferably diethyl ether, di-iso propyl ether, di butyl ether, tetrahydrofuran, organic alkyl esters, esters, hydrotropes, halogenated solvents such as dichloromethane, trichloromethane, oils like anise oil, camphor oil, essential oils and fragrance oils, spindle oil, cedarwood oil, cinnamon oil, citronella oil, peppermint oil, pine oil, lemon oil, fuel oil, mineral oil, polyester resins and polyester softeners. With regard to the esters, preferred esters are methyl acetate, ethyl acetate, butyl acetate, benzyl benzoate, aromatic esters such as benzoic acid esters such as benzyl benzoate; alkyl benzoates such as methyl or ethyl benzoates, phthalic acid esters, naphthalic acid ester, aromatic and non-aromatic carboxylic acid esters, such as propyl acetate, acetyltributylcitrate (ATBC), ethyl acrylate, and triacetin.

Hydrotropes are compounds that solubilize hydrophobic compounds in aqueous solutions by means other than micellar solubilization. Typically, hydrotropes comprise a hydrophilic part and a hydrophobic part (similar to surfactants), but the hydrophobic part is generally too small to cause spontaneous self-aggregation. The hydrotrope can be preferably selected from phosphate esters based e.g. on either alcohols, ethoxylated alcohols or phenyl ethoxylates such as those available from Lakeland Laboratories Ltd., among others.

The aqueous washing solution may also comprise oils like anise oil, camphor oil, essential oils and fragrance oils, spindle oil, cedarwood oil, cinnamon oil, citronella oil, peppermint oil, pine oil, lemon oil, fuel oil, mineral oil but also polyester resins and polyester softeners. However, it can be preferred that the main component of the washing solution is a

polar component.

pH - acid and base

The first layer can be dissolved in pure water at pH 7, or 6 < pH < 8, for example. However, to enable an efficient recycling process including purification and/or decontamination of the second and/or third layer, the pH of the aqueous washing solution is preferably alkaline or acidic. In a first alternative the aqueous washing solution has a pH ≥ 8, more preferably ≥ 10, more preferably about ≥ 11, and wherein the pH of the aqueous washing solution is adjusted by adding the alkaline agent, preferably NaOH. The use of organic bases such as ammonia in order to adjust the pH is also possible.

Alternatively, the aqueous washing solution has a pH ≤ 6, more preferably ≤ 4, more preferably about ≤ 3, and wherein the pH of the aqueous washing solution is adjusted by adding the acid agent, preferably HCl. The use of organic acids such as formic acid in order to adjust the pH is also possible.

Temperature

According to another preferred embodiment of the invention, the aqueous washing solution has a temperature ≥ 5 °C to ≤ 100 °C when the flakes, granulates and/or or powder are exposed to the aqueous washing solution. Preferably the temperature ≥ 35 °C to ≤ 100 °C, and further preferably ≥ 65 °C to ≤ 100 °C. Elevated temperatures make the dissolution and/or disintegration of the first layer more efficient.

Time

Depending on the temperature and/or the size of the flakes, granulates and/or powder, the time needed for dissolution and/or disintegration of the first layer varies. In this regard and according to another preferred embodiment of the invention, the flakes, granulates and/or or powder are exposed to the aqueous washing solution for ≥ 1 minute to ≤ 240 minutes.

DETAILED DESCRIPTION OF THE EXAMPLES

The invention will be described in the following with reference to the examples 1 to 12. In every example at first the structure of the sheet material with the different layers is indicated. The first layer - i.e. the layer consisting of the material that comprises at least 50 wt% of the functional component, based on the weight of the material, the functional component consisting of one or more water-soluble polymers and/or one or more water-swellable polymers, such that the layer is a water-soluble layer or a water-disintegrating layer - is in the following called separation layer.

Regarding the polyvinyl alcohol (PVOH) in the separation layer, the following nomenclature is used:

| Nomenclature for PVOH according to degree of hydrolysis and polymerization | | | |
|---|---|---|---|
| molecular weight (g/mol) → ↓ degree of hydrolysis | Low (1000 to 10000) | Medium (10000 to 50000) | High (above 50000) |
| Partial 87-89% | L1 | M1 | H1 |
| Intermediate 90 - 97% | L2 | M2 | H2 |
| Fully 98-99% | L3 | M3 | H3 |
| Super 99,3+% | L4 | M4 | H4 |

**Example 1: Blow Molding of a 100mL bottle**

Outer layer / separation layer / inner layer
40% / 20% / 40%; total wall thickness: 0.6 mm

Outer layer: PP Lyondell RB307MO

Separation layer: 79 wt% PVOH-L1, 15.5 wt% Glycerol (small organic additive), 5 wt% Ca-Stearat (small organic additive), 0.25 wt% Solvent Blue 104, 0.25 wt% Silica (inorganic additive) based on the weight of the material of the

separation layer.

Inner layer: PP Lyondell Basell RB307MO

A 100 mL-bottle is blow molded with an inner and outer layer and a separation layer. The result is a deep blue, slightly translucent coloration, which has a certain depth effect due to the outer transparent PP layer. If it is not possible to separate this blue layer during recycling, blue discoloured and therefore inferior recyclates are obtained when the flakes are molten.

For recycling, the bottle is shredded into flakes with an average edge length of 3 mm and placed in a 45°C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate, to improve the wettability of the flakes and 0.5 wt% polyvinylpyrrolidone (PVP) as a resoiling inhibitor. After 45 minutes of stirring in the wash solution, the flakes are filtered through a sieve, rinsed with fresh wash solution, and dried at 90 °C for 15 minutes. Pure clear flakes are obtained with a thickness that corresponds to the thickness of the original wall thickness of the inner and outer layer. The blue coloured separation layer has been completely removed. Spectroscopic analyses show that no color residues of the separation layer remain on the flakes.

**Example 2: Blow-Molding of a 5-layer 1L-bottle**

Outer layer / tie-layer / separation layer / tie-layer / inner layer
42% / 3% / 10% / 3% / 42%; total wall thickness: 1 mm

Outer and inner layer: HDPE, Lyondel Hostalen ACP 5831D + 4 wt% masterbatch white (Deifel GmbH & Co. KG Buntfarbenfabrik; type S5007-6 ($TiO_2$ in an LDPE carrier)) based on the weight of the material of the inner or outer layer.

Tie-layer: PE-g-MSA, The Compound Company, Yparex 9601

Separation layer: 84 wt% PVOH-H2, 15 wt% Glycerol (small organic additive), 1 wt% Acid Black 1 based on the weight of the material of the separation layer.

A 1L-bottle is blow molded with an inner and outer layer, a separation layer and tie-layers to improve adhesion between the inner-/outer layer and the separation layer.

The black separation layer serves as a UV barrier as well as an oxygen barrier to protect the contents/filling goods from external environmental influences. If it is not possible to separate this black layer during recycling, grey discoloured and therefore inferior recyclates are obtained when the flakes are molten.

After use, the bottle is shredded into flakes with an average edge length of 3 mm and placed in a 75°C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate, to improve the wettability of the flakes and 0.5 wt% polyvinylpyrrolidone (PVP) as a resoiling inhibitor. The pH of the wash bath is adjusted to pH 12 using sodium hydroxide. After 30 minutes of stirring in the wash solution, the flakes are filtered through a sieve, rinsed with fresh wash solution and dried at 90 °C for 15 minutes. Pure white flakes are obtained with a thickness that corresponds to the thickness of the original wall thickness of the inner and outer layer. The black coloured separation layer has been completely removed. Spectroscopic analyses show that minimal color residues of the separation layer remain on the flakes, but these do not affect the further processing and reuse of the flakes in any way as the further processing/re-granulation of the flakes into pellets proves.

**Example 3: Blow-Molding of a 5-layer 70mL-bottle**

Outer layer / tie-layer / separation layer / tie-layer / inner layer
42% / 3% / 10% / 3% / 42%; total wall thickness: 1 mm

Outer and inner layer: HDPE, Borealis BB2541

Tie-layer: PE-g-MSA, The Compound Company, Yparex 9601
Separation layer: 79.8 wt% PVOH-M1, 20 wt% Glycerol (small organic additive), 0,2% Disperse Red 60 based on the weight of the material of the separation layer.

A 70 mL-bottle is blow molded with an inner and outer layer, a separation layer and tie-layers to improve adhesion between inner-/outer layer and separation layer.

For recycling the bottle is shredded into flakes with an average edge length of 3 mm and placed in a 30°C tempered wash bath and stirred. The wash bath contains 1% of mixture of ionic and non-ionic surfactants (35 wt% Benzenesulfonic acid, mono-C10-13-alkyl derivatives, compounds with ethanolamine, 5 wt% C10 - C13 alkylsulfoniciacids, 5 wt% Isotridecanolethoxylate, 3 wt% Benzylbenzoat) to improve the wettability of the flakes, 2 wt% of a mixture of C7 - C9 alkanes, 0.5 wt% formamidine sulfonic acid as reduction agent and 0.5 wt% polyvinylpyrrolidone (PVP) as a resoiling inhibitor. After 30 minutes of stirring in the wash solution, the flakes are filtered through a sieve, rinsed with fresh wash solution and dried at 90 °C for 15 minutes.

Nature-colored HDPE flakes are obtained with a thickness that corresponds to the thickness of the original wall thickness of the inner and outer layer. The red coloured separation layer has been completely removed. Spectroscopic analyses show no coloured residues of the separation layer remain on the flakes.

**Example 4: 100μm 5-layer blown-film**

Outer layer / tie-layer / separation layer / tie-layer / inner layer
30% / 2% / 5% / 2% / 61%; total film thickness: 0.1 mm

Outer layer: LLDPE , Total Energies Q3018C + surrugate (intentially added substance): Limonene 25 ppm
Inner layer: LLDPE, Total Energies Q3018C + 2% masterbatch white (Deifel GmbH & Co. KG Buntfarbenfabrik; type S5007-6 ($TiO_2$ in LDPE as carrier)) based on the weight of the material of the inner layer.

Tie-layer: Lyondell, Plexar PX3184
Separation layer: 89.75 wt% PVOH-M3, 10 wt% urea (small organic additive), 0.25% Solvent Blue 104 based on the weight of the material of the separation layer.

A 100 μm 5-layer blown film with a white inner and transparent outer layer, a blue-colored separation layer and tie-layers to improve adhesion between inner-/outer layer and separation layer is produced.

For recycling in a first variant the film is shredded into flakes with an average edge length of 5 mm and placed in a 90 °C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate), to improve the wettability of the flakes and 0.5 wt% polyvinylpyrrolidone (PVP) as a resoiling inhibitor. The pH of the wash bath is adjusted to pH 12 using sodium hydroxide. Furthermore, it contains 1.5 wt% of light petrol (mixture of C7 to C9 hydrocarbons, boiling range 100 - 140°C) as swelling agent for the LLDPE for improved decontamination (extraction of Limonene) and 2 g/l Redulit F (reduction agent, Aminoiminomethanesulfinic acid) to reduce the dye. After 30 minutes of stirring in the wash solution, the flakes are filtered through a sieve, rinsed several times with fresh wash solution and dried at 90°C for 15 minutes.

A mixture of white and nature-colored LLDPE flakes are obtained with a thickness that corresponds to the thickness of the original wall thickness of the inner and outer layer. The flakes could be separated by color separation. Further examination of the colourless LLDPE-flakes (previously outer layer, intentionally contaminated with limonene) reveals a residual limonene content of only 1 ppm. The blue coloured separation layer has been completely removed. Spectroscopic analyses show that minimal residues of the uncolored tie-layer remain on the flakes, but these do not affect the further processing and reuse of the flakes in any way as the further processing/re-granulation of the flakes into pellets proves.

For recycling the film in a second variant the film is shredded into flakes with an average edge length of 5 mm and placed in a 25°C tempered wash bath and stirred. The wash bath contains a 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate) to improve the wettability of the flakes and 0.5 wt% polyvinylpyrrolidone (PVP) as a resoiling inhibitor. The pH of the wash bath is adjusted to pH 12 using sodium hydroxide. After 30 minutes of stirring in the wash solution, the flakes are filtered through a sieve, rinsed several times with fresh wash solution and dried at 90°C for 15 minutes.

The blue coloured separation layer has been completely removed. The obtained mixture of white and nature-colored LLDPE flakes are further sorted by colour separation.

The white flakes with a thickness that corresponds to the thickness of the original wall thickness of the inner layer are regranulated into pellets for further use.

The nature-coloured flakes (previously outer layer) are placed again in a wash bath/decontamination bath containing 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate) to improve the wettability of the flakes and 0.5 wt% polyvinylpyrrolidone (PVP) as a resoiling inhibitor. The pH of the wash bath is adjusted to pH 12 using sodium hydroxide.

Furthermore, it contains 1.5 wt% of light petrol (mixture of C7 to C9 hydrocarbons, boiling range 100 °C - 140 °C) as swelling agent for the LLDPE for decontamination (extraction of Limonene). After 30 minutes of stirring at 90 °C in the

wash solution, the flakes are filtered through a sieve, rinsed several times with fresh wash solution and dried at 90 °C for 15 minutes.

Further examination of the colourless LLDPE-flakes (previously outer layer, intentionally contaminated with limonene) by GC/MS reveals a residual Limonene content of only 1 ppm. The second recycling variant has the advantage that only the flakes to be decontaminated are subjected to hot washing, which reduces energy costs and increases the efficiency of the process. The disadvantage is that a 2nd washing process is required.

**Example 5: 75μm 5-layer cast-film**

Outer layer / tie-layer / separation layer / tie-layer / inner layer
40% / 5% / 10% / 5% / 40%; total film thickness: 0.075 mm

Outer and inner layer: LDPE, Sabic 2404N0
Tie-layer: PE-g-MSA: SK Chemicals Orevac OE850, 30 wt%; LDPE Sabic 2404N0, 70 wt% based on the weight of the material of the tie-layer.

Separation layer: 89 wt% PVOH-L1, 10 wt% PEG 200 (large organic additive), 1 wt% Pigment Red 177 (40% dispersed in PEG 200) based on the weight of the material of the separation layer.

A 100μm 5-layer cast film with transparent inner and outer layer, a red colored separation layer and tie-layers to improve adhesion between inner-/outer layer and separation layer is produced.

For recycling the film is shredded into flakes with an average edge length of 5 mm and placed in a 45°C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate) to improve the wettability of the flakes and 0.5 wt% polyvinylpyrrolidone (PVP) as a resoiling inhibitor.

After 30 minutes of stirring in the wash solution, the flakes are filtered through a sieve, rinsed several times with fresh wash solution and dried at 70 °C for 15 minutes. Colorless LDPE flakes are obtained with a thickness that corresponds to the thickness of the original wall thickness of the inner and outer layer. The red coloured separation layer has been completely removed. Spectroscopic analyses show that minimal residues of the uncolored tie-layer remain on the flakes, but these do not affect the further processing and reuse of the flakes in any way as the further processing/re-granulation of the flakes into pellets proves.

**Example 6: Lamination of 260g-paper and PE with a colored separation layer (CupStock)**

Outer layer (paper) / separation layer / tie-layer / inner layer (PE as water insoluble polymer
260 g/m$^2$ / 15 g/m$^2$ / 7.5 g/m$^2$ / 17.5 g/m$^2$; total grammage 300 g/m$^2$
Outer layer: Base paper: 260 g/m$^2$ sulphate paper made from virgin fibre
Separation layer: 79.99 wt% PVOH-L1, 10 wt% glycerol (small organic additive), 10 wt% PEG 200 (large organic additive); 0.01 wt% Pigment Blue 15 (40% dispersed in PEG 200) based on the weight of the material of the separation layer; coating weight 15g/m$^2$
Tie-layer: Lyondell Plexar PX5125, coating weight 7.5 g/m$^2$
Inner layer: LDPE: Lyondell Lupolen 2420K, coating weight 17.5 g/m$^2$

A light blue colored separation layer, a tie-layer and a colorless PE layer are coextruded on top of the 260g/m$^2$ paper. The roll is cut into sheet format in order to subsequently produce die-cut parts from the sheets. The die-cut parts (wall and base) are formed into paper-based 250 ml cups for hot drinks and finally sealed.

The separability of plastics and paper fibres is tested using the CEPI 2 recyclability test (CEPI recyclability laboratory test method, Version 2, October 2022). The light blue separating layer detaches quickly and completely from the paper fibre, so that the PE layer is completely detached at the same time. Accordingly, the paper fibre is almost completely recovered in white and in high purity with a yield of 85.5%. The PE layer is also separated almost completely (> 99%) as a course reject. The separation layer and the colour pigment pass into the aqueous phase and are thus separated.

**Example 7: 75μm 5-layer extrusion laminated film**

Outer layer / tie-layer / separation layer / tie-layer / inner layer
50μm / 15μm / 30μm / 15μm / 50μm
Outer and inner layer: PLA film; Bleher Folientechnik GmbH, optimont PLA 50μm
Tie-layer: Polymer-g-MSA; Byk, SCONA TPPL 1112 PA (high-performance polymer modifier based on a polylactic acid (PLA) functionalized with maleic anhydride)
Separation layer: 78 wt% PVOH-M2, 15 wt% glycerol (small organic additive), 5 wt% PEG 200 (large organic additive) 2% Disperse Yellow 54 (25%, dispersed in PEG 200)
Two 50 μm transparent/colorless PLA-films are extrusion laminated with a 30 μm yellow colored PVOH separation layer and tie-layers between PLA films and PVOH for improved adhesion.

For recycling the film is shredded into flakes with an average edge length of 5 mm and placed in a 75°C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10wt% fatty alcohol C12/14 ether sulfate) to improve the wettability of the flakes and 0.5 wt% polyvinylpyrrolidone (PVP) as a resoiling inhibitor. The pH of the wash bath is adjusted to pH 12 using sodium hydroxide. Furthermore, it contains 2 g/l Redulit F (reduction agent, Aminoiminomethanesulfinic acid) to reduce the dye. After 30 minutes of stirring in the wash solution, the flakes are filtered through a sieve, rinsed several times with fresh wash solution and dried at 85°C for 15 minutes.

Colorless PLA flakes are obtained with a thickness that corresponds to the thickness of the original wall thickness of the inner and outer layer. The yellow-colored separation layer has been completely removed, the dye has been reduced to colorless. Spectroscopic analyses show that minimal residues of the uncolored tie-layer remain on the flakes, but these do not affect the further processing and reuse of the flakes in any way as the further processing/re-granulation of the flakes into pellets proves.

**Example 8: 100μm 5-layer blown-film**

Outer layer / tie-layer / separation layer / tie-layer / inner layer
41% / 4% / 10% / 4% / 41% (total thickness 100μm)
Outer layer: PBAT, BASF EcoFlex 1200F, 2% masterbatch white (Avient; TiO2 masterbatch based on PBAT)
Tie-layer: Polymer-g-MSA; Byk, SCONA TPPL 1112 PA (high-performance polymer modifier based on a polylactic acid (PLA)
Separation layer: 79 wt% PVOH-H2, 10 wt% glycerol (small organic additive) 10 wt% PEG 200 (large organic additive); 1 wt% Solvent Yellow 163 (20 wt% dispersed in PEG 200; 1 wt% dispersant Byk SCONA TPPL 5112 PA) based on the weight of the material of the separation layer.
Tie-layer: Lyondell, Plexar PX3184
Inner layer: LLDPE, Total Energies Q3018C + Surrogate (intentionally added substance): Limonene 25 ppm

A 100μm 5-layer blown film with a white outer layer of PBAT, a transparent inner layer of LDPE, a yellow-colored separation layer and tie-layers as described above to improve adhesion between inner-/outer layer and separation layer is produced. The inner LDPE layer is intentionally contaminated (IAS) with 25ppm Limonene.

For recycling film is shredded into flakes with an average edge length of 5 mm and placed in a 75°C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate) to improve the wettability of the flakes and 0.5 wt% polyvinylpyrrolidone (PVP) as a resoiling inhibitor. The pH of the wash bath is adjusted to pH 12 using sodium hydroxide. Furthermore, it contains 1.5 wt% of light petrol (mixture of C7 to C9 hydrocarbons, boiling range 100 °C - 140 °C) as swelling agent for the LDPE for improved decontamination (extraction of Limonene) and 2 g/l Redulit F (reduction agent, Aminoiminomethanesulfinic acid) to reduce the dye.

During the 30 minutes of stirring, the separating layer dissolves completely and the PBAT and PE film separate from each other. Due to the density of 1.2 $g/cm^3$ of the PBAT film, it sinks to the bottom of the washing solution while the PE film floats with a density of 0.93 $g/m^2$. Accordingly, the two films can be separated by the so-called swim-sink process. The transparent PE film on the surface of the wash bath is completely skimmed off. The PBAT film is then filtered off from the washing solution.

Both now unmixed flakes are rinsed several times with fresh wash solution and dried at 90°C for 15 minutes. The yellow-colored separation layer has been completely removed. Further examination of the colourless LDPE-flakes (previously inner layer, intentionally contaminated with limonene) reveals a residual limonene content of only 1 ppm. Spectroscopic analyses of the white PBAT-flakes and the transparent LDPE-flakes show that minimal residues of the uncolored tie-layer remain on the flakes, but these do not affect the further processing and reuse of the flakes in any way as

the further processing/re-granulation of the flakes into pellets proves.

**Example 9 (laminate by extrusion coating and lamination)**

Outer layer / tie-layer / separation layer / inner layer
60 g/m$^2$/ 7.5 g/m$^2$/ 17.5 g/m$^2$/ 18 g/m$^2$

Outer layer: DuPont, Tyvek 2FS (HDPE melt-blown (non-woven), 59.5 g/m$^2$)

Tie-Layer: PE-g-MSA: Lyondell, Plexar PX5125
Separation layer: polyvinylpyrrolidone (PVP), BASF Sokolan K 30 P, 0.5 wt% Pigment Green 7 (20 wt% dispersed in PEG 200; 1% dispersant Byk SCONA TPPL 5112 PA) based on the weight of the material of the separation layer.
Inner layer: BOPP film, Jindal, OPP 21MB866 (20µm, C2S coated with acrylic and PVOH/EVOH)

The Tyvek 2FS is coextrusion coated with the tie-layer and the separation layer and laminated with the coated BOPP film (PVOH/EVOH coated side heading to the extrusion coated polyvinylpyrrolidone (PVP)). Due to the opacity (white) of the non-woven Tyvek, the green-coloured separation layer is only visible from the side of the transparent BOPP film.

For recycling the flexible composite is shredded into flakes with an average edge length of 5 mm and placed in a 75 °C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate) to improve the wettability of the flakes and 0.5 wt% polyvinylpyrrolidone (PVP) as a resoiling inhibitor. The pH of the wash bath is adjusted to pH 12 using sodium hydroxide. Furthermore, it contains 1.5 wt% of light petrol (mixture of C7 to C9 hydrocarbons, boiling range 100 °C - 140 °C) as swelling agent for the Tyvek. After 30 minutes of stirring in the wash solution, the flakes are filtered through a sieve, rinsed several times with fresh wash solution and dried at 90 °C for 15 minutes.

A mixture of white Tyvek and clear PP- flakes are obtained with a thickness that corresponds to the thickness of the original wall thickness of the inner and outer layer. The flakes could be separated by color separation. The green coloured separation layer has been completely removed. Spectroscopic analyses show that minimal residues of the uncolored tie-layer remain on the flakes, but these do not affect the further processing and reuse of the flakes in any way as the further processing/re-granulation of the flakes into pellets proves.

**Example 10: (laminate by extrusion coating and lamination)**

Outer layer (paper) / tie- and separation layer / inner layer (aluminium foil)
40 g/m$^2$ / 15 g/m$^2$ / 15µm (26 g/m$^2$)

Outer layer: Smurfit Kappa Biogum, 40 g/m$^2$ (100% virgin long fibre)

Separation and tie-Layer: 84.9 wt% Belland Technology acrylic ester-acrylic acid copolymer; 15 wt% platelet-shaped mica muscovite (inorganic additive), 0.1 wt% Pigment Red 57:1 (15 wt% in acetylbutylcitrate (ATBC) based on the weight of the material of the separation layer.
Due to its acidic functions, the Belland Technology polymer is both tie-layer, because of its very good adhesion to paper and Al foil as well as separation layer due to its water solubility.
Inner layer: Aluxfoil Al-foil 15µm (26 g/m$^2$)

A light red colored tie-/separation layer is extruded on top of the 40g/m$^2$ paper by a slot die coater and the Al-foil is immediately laminated on top of the hot tie-/separation layer to give a flexible composite. The roll is cut into sheet format in order to subsequently produce a packaging material with low gas permeability and excellent light impermeability.

The separability of aluminium foil and paper fibres is tested using the CEPI 2 recyclability test (CEPI recyclability laboratory test method, Version 2, October 2022). The light red separating layer detaches quickly and dissolves completely from the paper fibre, so that the Al-foil is completely detached at the same time. Accordingly, the paper fibre is almost completely recovered in white and in high purity with a yield of 48.8%. The Al-foil is also separated almost completely (> 99%) as a course reject. The separation layer, the colour pigment and the inorganic additive pass into the aqueous phase and are thus separated.

**Example 11: Blow Molding of a 100mL bottle**

Outer layer / separation layer / inner layer
40% / 20% / 40%; total wall thickness: 0.6 mm

Outer layer: PP Lyondell RB307MO

Separation layer: 60 wt% PVOH-L1, 15 wt% Glycerol (small organic additive), 5 wt% Ca-Stearate (small organic additive), 20 wt% limestone (particle size 5μm, inorganic additive) based on the weight of the material of the separation layer.
Inner layer: PP Lyondell RB307MO

A 100 mL-bottle is blow molded with an inner and outer layer and a separation layer. The result is a translucent milky white coloration (haze 45%). If it is not possible to separate this milky white layer during recycling, inferior recyclates contaminated with limestone are obtained when the flakes are molten.

For recycling, the bottle is shredded into flakes with an average edge length of 3 mm and placed in a 55°C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate, to improve the wettability of the flakes and 0.5 wt% polyvinylpyrrolidone (PVP) as a resoiling inhibitor. After 45 minutes of stirring in the wash solution, the flakes are filtered through a sieve, rinsed with fresh wash solution, and dried at 90 °C for 15 minutes. Pure clear flakes are obtained with a thickness that corresponds to the thickness of the original wall thickness of the inner and outer layer. The milky white coloured separation layer has been completely removed. Spectroscopic analyses show that no residues of the separation layer remain on the flakes.

**Example 12: Blow Molding of a 500mL bottle**

Outer layer / tie-layer / separation layer / tie-layer / inner layer
49% / 3% / 20% / 3% / 25%; total wall thickness: 0.8 mm

Outer layer: PP Lyondell RB307MO

Tie-Layer: PP-g-MSA, Polyram Bondyram TL 1221
Separation layer: 85 wt% PVOH-M4, 10 wt% Pentaerythritol (small organic additive), 5wt% Glycerol (small organic additive), based on the weight of the material of the separation layer.
Inner layer: PP Lyondell Basell RB307MO

A 100 mL-bottle is blow molded with an inner and outer layer and a separation layer. After production, the bottle is annealed at 90 °C for 60 minutes to improve crystallisation in the separation layer. As a result, the separation layer turns a translucent milky white colour (haze 12.5%).

For recycling, the bottle is shredded into flakes with an average edge length of 3 mm and placed in a 95°C tempered wash bath and stirred. The wash bath contains 1 wt% Hoesch TM 40 (mixture of 25 wt% - 50 wt% C10 to C13-alkyl substituted benzenesulfonic acid and 2.5 wt% - 10 wt% fatty alcohol C12/14 ether sulfate, to improve the wettability of the flakes. After 45 minutes of stirring in the wash solution, the flakes are filtered through a sieve, rinsed with fresh wash solution, and dried at 90 °C for 15 minutes. Pure clear flakes are obtained with a thickness that corresponds to the thickness of the original wall thickness of the inner and outer layer. The milky white coloured separation layer has been completely removed. Spectroscopic analyses show that minimal residues of the tie-layer remain on the flakes, but these do not affect the further processing and reuse of the flakes in any way as the further processing/re-granulation of the flakes into pellets proves.

## Claims

1. A sheet material comprising at least a first layer, a second layer, and a third layer,

wherein the first layer is arranged in between the second layer and the third layer, wherein the first layer consists of a first material, the first material comprising at least 50 wt% of a functional component based on the weight of the first material, the functional component consisting of one or more water-soluble polymers and/or one or more water-swellable polymers, such that the first layer is a water-soluble layer or a water-disintegrating layer;
wherein the first layer comprises a transmission haze ≥ 1.5 % determined according to ASTM D 1003, and/or the first material comprises a coloring agent;
wherein the second layer consists of a second material, the second material comprising paper, non-woven textile, woven textile, a metal, preferably aluminum, a glasslike layer comprising $SiO_x$, $AlO_x$ and/or C, a radiation cured coating, a physically or chemically cross-linked coating, a layer solidified by evaporation of a solvent and/or a water-insoluble polymer; and
wherein the third layer consists of a third material, the third material comprising paper, non-woven textile, woven textile, a metal, preferably aluminum, a glasslike layer comprising $SiO_x$, $AlO_x$ and/or C, a radiation cured coating, a physically or chemically cross-linked coating, a layer solidified by evaporation of a solvent and/or a water-insoluble polymer.

2. The sheet material according to claim 1, wherein at least one of an a-value or b-value of a CIELAB color space is different to 0 for the first layer, or wherein both of an a-value and b-value of a CIELAB color space is 0 for the first layer.

3. The sheet material according to any of the previous claims, wherein the functional component of the first material comprises crystallites with a crystallite size ≥ 400 nm.

4. The sheet material according to any of the previous claims, wherein the second material and/or wherein the third material comprises and preferably consists of the water-insoluble polymer.

5. The sheet material according to any of the previous claims, wherein the first layer is a foamed layer.

6. The sheet material according to any of the previous claims, wherein a thickness of the first layer is lower than a thickness of the second layer and/or wherein the thickness of the first layer is lower than a thickness of the third layer.

7. The sheet material according to any of the previous claims, wherein the sheet material comprises at least one, preferably two, further layer, the further layer being arranged in between the first layer and the second layer and/or in between the first layer and the third layer.

8. The sheet material according to the previous claim, wherein the further layer is free of a coloring agent.

9. The sheet material according to any of the previous claims, wherein the first layer is entirely encapsulated by the second layer and the third layer.

10. The sheet material according to any of the previous claims, wherein the first material is free of a water-insoluble compound.

11. The sheet material according to any of the previous claims, wherein the second material and/or the third material is free of a coloring agent.

12. The sheet material according to any of the previous claims, wherein the second material is different from the third material, wherein the second layer and the third layer are uniformly colored layers, and wherein the color of the second layer is different to the color of the third layer in such a way that at least one of L*-value, a-value, or b-value of a CIELAB color space of the second layer is different to the respective L*-value, a-value, or b-value of the third layer by at least 10, preferably at least 20, and further preferably at least 30.

13. The sheet material according to any of the previous claims, wherein the first material comprises the coloring agent, and wherein the coloring agent is selected from organic pigments, organic dyes, inorganic pigments, opacifying agents, or a combination thereof, and preferably selected from the group consisting of phthalocyanine, diketopyrrolopyrrole, polymethine, anthraquinone, indanthrone, monoazo, diazo, methine, quinophthalone, perinone, naphthalidimide, indigo, quinoline and thioindigo dyes and pigments, natural inorganic pigments, such as ochre, vermilion or red chalk titan, and synthetic pigments such as titanium(IV)oxide, calcium pigments, copper pigments, bismuth pigments, cobalt pigments, nickel pigments, molybdenum pigments, cadmium pigments, lead pigments, iron pigments, chrome pigments, carbon black, silicate minerals such as fumed silica - also known as pyrogenic silica,

silane compounds with organic and/or inorganic attachments, thermoplastic polymers such as polyacrylate, polyurethane, polyamide, thermosetting polymers such as thermosetting polyurethane, aminoresins such as polymethylurea, and combinations thereof.

**14.** The sheet material according to the previous claim, wherein an amount of the coloring agent in the first material is at least 0.001 wt%, based on the weight of the first material.

**15.** The sheet material according to claims 13 or 14, wherein an amount of the coloring agent in the first material is not more than 20 wt%, preferably not more than 10°wt%, based on the weight of the first material.

**16.** The sheet material according to any of the previous claims, wherein the amount of the functional component in the first material is at least 60 wt%, preferably at least 70 wt% and further preferably at least 75 wt% based on the weight of the first material.

**17.** The sheet material according to any of the previous claims, wherein the water-soluble polymer of the functional component of the first material is selected from the group consisting of polyelectrolytes and water-soluble ionic polymers, water-soluble non-ionic polymers, preferably polyvinyl alcohols and polyvinylpyrrolidones, non-ionic homopolymers, hydrophobic-associating polymers, water-soluble polysiloxanes.

**18.** The sheet material according to any of the previous claims, wherein the functional component comprises and preferably consists of polyvinyl alcohol having a degree of hydrolysis of at least 75 mol%.

**19.** The sheet material according to any of the previous claims, wherein the first layer has an oxygen transmission rate of $\leq$ 5 $cm^3/(m^2 \cdot day)$, preferably of $\leq$ 3 $cm^3/(m^2 \cdot day)$, and more preferably of $\leq$ 1 $cm^3/(m^2 \cdot day)$, referring to a thickness of the first layer of 100 $\mu$m.

**20.** The sheet material according to any of the previous claims, wherein the water-swellable polymer of the functional component of the first material is selected from the group consisting of a crosslinked water-soluble polymer, a crosslinked poly acrylamide and its copolymers, starch, starch derivates, cellulose, cellulose derivatives, crosscarmellose, sodium croscarmellose, crospovidone, sodium starch glycolate, alginic acids, dextrans and cross-linked polyvinylpyrolidones, cross-linked poly(vinyl alcohol) and copolymers, cross-linked polyethylene oxide and starch grafted copolymer of polyacrylonitrile.

**21.** The sheet material according to any of the previous claims, wherein the first material further comprises an inorganic additive in an amount of 0.5 wt% to 50 wt%, based on the weight of the first material.

**22.** The sheet material according to the previous claim, wherein the inorganic additive is selected from inorganic halide, carbonate, hydroxide, and/or oxide salts of the I to III main group of the periodic system, in particular salts of alkali metals or alkaline earth metals, salts of boron and aluminum, in particular the polyvalent cations such as $B^{3+}$ and $Al^{3+}$, preferably in the form of $B(OH)_3$ or $AlCl_3$; hydrotalcite, limestone, talc, silicate minerals and silicates, kaolin, clay minerals, mica, such as iron mica, phlogopite mica or muscovite mica, quartz, wollastonite, bentonite, preferably montmorillonite, barium or sodium sulphate, rock flour, functional fillers such as aluminum trihydroxide and magnesium dihydroxide; and/or silicon dioxide in the form of glass beads, glass fibers, glass flour and/or glass powder.

**23.** The sheet material according to any of the previous claims, wherein the first material further comprises an organic additive having a molecular weight $\geq$ 1000 g/mol in an amount of 0.1 wt% to 40 wt%, based on the weight of the first material.

**24.** The sheet material according to the previous claim, wherein the organic additive having a molecular weight $\geq$ 1000 g/mol is selected from polyhydroxyalkanoates such as poly hydroxy butyrate or polyhydroxy hexanoate, polyesters such as poly butylene adipat terephthalat, polybutylene succinate, poly glycolide, polylactide, poly hydroxy propionate or poly $\varepsilon$-caprolactone, glycolized or amorphous aliphatic-aromatic polyesters, polyethylene terephthalate (PET), glycolized or amorphous polyethylene terephthalate (PET-G or PET-A), polytrimethylenterephthalte (PTT); polyamides such as poly caprolactam (PA6), PA 6.6, PA12; polymers or copolymers with acid anhydrides or glycidyl groups such as ethylene or propylene-maleic anhydride copolymers; polyethylene or polypropylene with grafted maleic anhydride units; alkali-soluble resin (ASR), hydrophobically-modified alkali-soluble rheology modifiers (HASE), polybutylenterephthalate (PBT), polyethylene glycol beginning with PEG 39 (HO-(C2H4O)n-H and n $\geq$ 39); elastomers such as natural rubbers or synthetic rubbers such as styrene-butadiene rubber (SBR), acrylonitrile

butadiene rubber (NBR), ethylene propylene diene rubber (EPDM)), thermoplastic elastomers (TPE), fluoro elastomer, silicone rubbers, liquid crystalline elastomers (LCE), cotton, jute, hemp, sisal, bagasse, millet, nut shells, wood flour, cork, wheat chaff, cellulose, textile fibers, fabric shreds, coffee grounds, and/or generally prepared waste or by-products from the processing of agricultural products, and/or mixtures thereof.

**25.** The sheet material according to any of the previous claims, wherein the first material further comprises an organic additive having a molecular weight < 1000 g/mol in an amount of 0.1 wt% to 40 wt%, based on the weight of the first material.

**26.** The sheet material according to the previous claim, wherein the organic additive having a molecular weight < 1000 g/mol is selected from:

- carboxylic acids and hydroxycarboxylic acids such as citric acid, tartaric acid, maleic acid, adipic acid, sebacic acid, terephthalic acid, fatty acids and their salts with elements of the I to III main group of the periodic system, in particular salts of alkali metals or alkaline earth metals;
- Ethers and/or esters of the above-mentioned carboxylic acids and hydroxycarboxylic acids, and/or fatty acids such as acetyl tributyl citrate (ATBC), triethyl citrate, citric acid esters and fatty acid esters of mono-, diglycerides and/or polyglycerides and polyols such as E471, E472, E475 to E477, E481 to E483, E491 to E495, azelaic esters and/or trimellitate esters,
- fatty alcohols, polyols, polyhydric alcohols such as glycol, di- or triethylene glycol, glycerol, pentaerythritol and/or neopentyl glycol, polyol esters and ethers of pentaerythritol and/or neopentyl glycol such as Glycerol triacetate (GTA), neopentyl glycol oleate and/or cocoate, glycerol mono-, di- and/or tri-oleate,
- polyethylene glycol up to PEG 38 ($HO-(C_2H_4O)_n-H$ and $n < 39$);
- amines, di-amines, and/or polyamines; amides, diamides, urea;
- aminopolycarboxylic acids;
- glycol ether, dialkyl glycols or glycol ethers such as ethylene glycol monomethyl ether, ethylene glycol monoethyl ether, ethylene glycol monopropyl ether, ethylene glycol monobutyl ether, ethylene glycol monophenyl ether, ethylene glycol monobenzyl ether, propylene glycol methyl ether, diethylene glycol monomethyl ether, diethylene glycol monoethyl ether, diethylene glycol mono-n-butyl ether, dipropyleneglycol methyl ether, ethylene glycol dimethyl ether, ethylene glycol diethyl ether, ethylene glycol dibutyl ether, ethylene glycol methyl ether acetate, ethylene glycol monoethyl ether acetate, ethylene glycol monobutyl ether acetate or propylene glycol methyl ether acetate.

**27.** The sheet material according to any of the previous claims, wherein the first material further comprises a compatibilizer in an amount of 0.1 wt% to 25 wt%, based on the weight of the first material.

**28.** The sheet material according to the previous claim, wherein the compatibilizer is selected from non-ionic surfactants such as ethylen ethoxylate, ethoxylates of fatty acids, ethoxylates of fatty alcohols; gemini surfactants, ionic surfactants.

**29.** The sheet material according to any of the previous claims, wherein the first material further comprises a dispersing agent in an amount of 0.1 wt% to 25 wt%, based on the weight of the first material.

**30.** The sheet material according to the previous claim, wherein the dispersing agent is selected from copolymer of vinyl alcohol and butanediol, polyethylene-acrylate-copolymer, polypropylene-acrylate-copolymer; polyethylene-polypropylene-acrylate-terpolymer, ethylene vinyl alcohol; Polyethylene-graft-maleic anhydride, Polypropylene-graft-maleic anhydride; Poly(ethylene-co-glycidyl methacrylate), Poly(ethylene-co-glycidyl acrylate), copolymer of Polyethylene-graft-maleic anhydride and Poly(ethylene-co-glycidyl methacrylate); and/or styrene-acrylonitrile-glycidyl methacrylate terpolymers.

**31.** The sheet material according to any of the previous claims, wherein the second material comprises at least 80 wt% of the water-insoluble polymer, based on the weight of the second material such that the second layer is a water-insoluble layer; and/or wherein the third material comprises at least 80 wt% of the water-insoluble polymer, based on the weight of the third material such that the third layer is a water-insoluble layer.

**32.** The sheet material according to any of the previous claims, wherein the water-insoluble polymer is selected from: Polyolefins such as Polyethylene (PE) (HDPE, LDPE, LLDPE, MDPE) or polypropylene (PP) and their copolymers, Polystyrole (PS), Polyesters such as polyethylen terephthalate (PET), polybutylen terephthalate (PBT), Polytrimethylen terephthalate (PTT), glycolized or amorphous polyethylene terephthalate (PET-G or A-PET), Polyesters such as Polycarabonate (PC), amorphous aliphatic-aromatic polyesters, polybutylene succinate (PBS), polybutylene adipate terephthalate (PBAT), and their copolymers, poly butylene (PB-1), poly glycolide, polylactide, poly hydroxy propionate or poly ε-caprolactone, and their copolymers; Polyhydroxyalkanoates such as poly hydroxy butyrate or polyhydroxy hexanoate, and their copolymers, Polyacrylates such as polymethylmethacrylate (PMMA), Polyvinyl halogenides such as polyvinylchloride (PVC) or polyvinylidene chloride (PVDC), Polyoxymethylen (POM), polyamides such as poly caprolactam (PA6, PA 6.6, PA12), acrylonitrile and acrylonitrile copolymers such as Acrylonitrile butadiene styrene (ABS), or Acrylonitrile styrene acrylate (ASA), polyurethanes, and mixtures thereof.

**33.** Packaging container or flexible composite comprising a sheet material according to any of the previous claims.

**34.** Packaging container or flexible composite according to the previous claim, wherein the packaging container or flexible composite is produced by blow molding, stretch blow molding, injection stretch blow molding, coextrusion, deepdrawing, blown or cast film, injection molding, and/or lamination.

**35.** A method for recycling the sheet material as defined in any of claims 1 to 32 or for recycling the packaging container or flexible composite as defined in any of claims 33 or 34, comprising the steps of:

- shredding the sheet material,packaging container or flexible composite to flakes, granulates and/or a powder,
- exposing the flakes, granulates and/or or powder to an aqueous washing solution;
- separating solid components from the aqueous washing solution.

**36.** The method according to claim 35, wherein the aqueous washing solution comprises at least 80 wt%, preferably at least 85 wt% and further preferably at least 90 wt% water, based on the total weight of aqueous washing solution.

**37.** The method according to any of claims 35 or 36, wherein the aqueous washing solution comprises water, and at least one of

- an oxidizing agent or a reducing agent,
- a nonpolar organic solvent,
- a polar organic solvent,
- a ionic or non-ionic surfactant,
- a chelation agent,
- a resoiling inhibitor,
- solvent additives;
- an acid and/or base to adjust a pH of the aqueous washing solution.

**38.** The method according to any of claims 35 to 37, wherein the aqueous washing solution has a temperature ≥ 5 °C to ≤ 100 °C when the flakes, granulates and/or or powder are exposed to the aqueous washing solution.

**39.** The method according to any of claims 35 to 38, wherein the flakes, granulates and/or or powder are exposed to the aqueous washing solution for ≥ 1 minute to ≤ 240 minutes.

Europäisches Patentamt
European Patent Office
Office européen des brevets

# EUROPEAN SEARCH REPORT

Application Number
EP 24 18 3819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/070376 A1 (KURARAY SPECIALITIES EUROPE [DE]; FUSS ROBERT [DE]) 28 August 2003 (2003-08-28) * pages 3-5 * * claims 1-5 * ----- | 1-39 | INV. B32B27/306 B32B27/06 B32B7/02 |
| X | EP 4 272 952 A1 (B&T ENTW UND VERMARKTUNGSGESELLSCHAFT MBH [DE]) 8 November 2023 (2023-11-08) * figure 6 * * paragraphs [0022] - [0026] * * paragraph [0013] * * paragraphs [0098] - [0099] * * claims 1-14 * ----- | 1-39 | |
| X | WO 2022/073086 A1 (TECHNOSOLUTIONS ASSESSORIA LTDA [BR]) 14 April 2022 (2022-04-14) * claims 1-7 * * paragraph [0044] * ----- | 1-39 | |
| | | | TECHNICAL FIELDS SEARCHED (IPC) |
| | | | B32B |

The present search report has been drawn up for all claims

1

| Place of search | Date of completion of the search | Examiner |
|---|---|---|
| The Hague | 21 November 2024 | Weiss, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 18 3819

This annex lists the patent family members relating to the patent documents cited in the above-mentioned European search report. The members are as contained in the European Patent Office EDP file on
The European Patent Office is in no way liable for these particulars which are merely given for the purpose of information.

21-11-2024

| Patent document cited in search report | Publication date | Patent family member(s) | Publication date |
|---|---|---|---|
| WO 03070376 A1 | 28-08-2003 | AT E337098 T1 | 15-09-2006 |
| | | AU 2003210279 A1 | 09-09-2003 |
| | | DE 10207591 A1 | 04-09-2003 |
| | | EP 1476252 A1 | 17-11-2004 |
| | | WO 03070376 A1 | 28-08-2003 |
| EP 4272952 A1 | 08-11-2023 | EP 4272952 A1 | 08-11-2023 |
| | | WO 2023213953 A1 | 09-11-2023 |
| WO 2022073086 A1 | 14-04-2022 | BR 102020020858 A2 | 26-04-2022 |
| | | WO 2022073086 A1 | 14-04-2022 |

EPO FORM P0459

For more details about this annex : see Official Journal of the European Patent Office, No. 12/82